(19) Europäisches Patentamt
European Patent Office
Office européen des brevets

(11) **EP 3 684 544 B1**

(12) **EUROPÄISCHE PATENTSCHRIFT**

(45) Veröffentlichungstag und Bekanntmachung des Hinweises auf die Patenterteilung:
**30.10.2024  Patentblatt 2024/44**

(21) Anmeldenummer: **18792367.7**

(22) Anmeldetag: **14.09.2018**

(51) Internationale Patentklassifikation (IPC):
**B23K 10/00** (2006.01)   **B23K 26/38** (2014.01)
**B23K 26/14** (2014.01)   **B23K 10/02** (2006.01)

(52) Gemeinsame Patentklassifikation (CPC):
**B23K 26/1462; B23K 10/00; B23K 10/02; B23K 26/38; H05H 1/34; H05H 1/3478; H05H 1/3484**

(86) Internationale Anmeldenummer:
**PCT/DE2018/100789**

(87) Internationale Veröffentlichungsnummer:
**WO 2019/057244 (28.03.2019 Gazette 2019/13)**

(54) **DÜSE FÜR EINEN PLASMABRENNERKOPF, LASERSCHNEIDKOPF UND PLASMA-LASER-SCHNEIDKOPF**

NOZZLE FOR A PLASMA ARC TORCH HEAD, LASER CUTTING HEAD AND PLASMA LASER CUTTING HEAD

BUSE POUR TÊTE DE CHALUMEAU À PLASMA, TÊTE DE DÉCOUPE AU LASER ET TÊTE DE DÉCOUPE AU LASER À PLASMA

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2017   DE 102017122015**
**17.01.2018   DE 102018100917**

(43) Veröffentlichungstag der Anmeldung:
**29.07.2020   Patentblatt 2020/31**

(73) Patentinhaber: **Kjellberg-Stiftung**
**03238 Finsterwalde (DE)**

(72) Erfinder:
• **GÜNTHER, Vadim**
**03238 Finsterwalde (DE)**

• **KRINK, Volker**
**03238 Finsterwalde (DE)**
• **GRUNDKE, Timo**
**03238 Finsterwalde (DE)**
• **LAURISCH, Frank**
**03238 Finsterwalde (DE)**

(74) Vertreter: **Manasse, Uwe**
**Boehmert & Boehmert**
**Anwaltspartnerschaft mbB**
**Pettenkoferstrasse 22**
**80336 München (DE)**

(56) Entgegenhaltungen:
**WO-A1-2016/138524      US-A- 5 695 662**
**US-A1- 2016 037 618**

**Beschreibung**

Plasmabrenner, Laserschneidköpfe und Plasma-Laser-Schneidköpfe werden ganz allgemein zur thermischen Bearbeitung elektrisch leitfähiger Materialien, wie Stahl und Nichteisenmetalle, eingesetzt.

Plasmabrenner bestehen üblicherweise aus einem Brennerkörper, einer Elektrode, einer Düse und einer Halterung dafür. Moderne Plasmabrenner verfügen zusätzlich über eine über der Düse angebrachte Düsenschutzkappe (siehe, zum Beispiel, US2016037618 A1). Oft wird eine Düse mittels einer Düsenkappe fixiert.

Die durch den Betrieb des Plasmabrenners infolge der durch den Lichtbogen verursachten hohen thermischen Belastung verschleißenden Bauteile sind je nach Plasmabrennertyp insbesondere die Elektrode, die Düse, die Düsenkappe, die Düsenschutzkappe, die Düsenschutzkappenhalterung und die Plasmagasführungs- und Sekundärgasführungsteile. Diese Bauteile können durch einen Bediener leicht gewechselt werden und somit als Verschleißteile bezeichnet werden.

Die Plasmabrenner sind über Leitungen an eine Stromquelle und eine Gasversorgung angeschlossen, die den Plasmabrenner versorgen. Weiterhin kann der Plasmabrenner an einer Kühleinrichtung für ein Kühlmedium, wie zum Beispiel eine Kühlflüssigkeit, angeschlossen sein.

Bei Plasmaschneidbrennern treten hohe thermische Belastungen auf. Das hat seine Ursache in der starken Einschnürung des Plasmastrahls durch die Düsenbohrung. Hier werden kleine Bohrungen verwendet, damit hohe Stromdichten von 50 bis 150 A/mm$^2$ in der Düsenbohrung, hohe Energiedichten von ca. 2x10$^6$ W/cm$^2$ und hohe Temperaturen von bis zu 30.000 K erzeugt werden. Weiterhin werden im Plasmaschneidbrenner höhere Gasdrücke, in der Regel bis zu 12 bar, verwendet. Die Kombination aus hoher Temperatur und großer kinetischer Energie des durch die Düsenbohrung strömenden Plasmagases führen zum Aufschmelzen des Werkstücks und zum Austreiben der Schmelze. Es entsteht eine Schnittfuge und das Werkstück wird getrennt. Beim Austritt des Plasmastrahls aus der Düse und/oder aus der Düsenschutzkappe tritt je nach Schneidstrom und Stromdichte in der Düse und verwendeten Gasen eine hohe Lärmbelastung auf. Diese kann über 100 dB(A) betragen. Die für den Menschen wahrnehmbaren Schallfrequenzen liegen im Bereich von ca. 20 Herz bis ca. 20.000 Hertz. Hohe Frequenzen (> 1.000 Hertz) mit großen Amplituden werden nicht nur als unangenehm empfunden, sondern können ohne geeignete Schutzmittel auch gesundheitlich negative Auswirkungen haben. Zeichnet man die Frequenzen des Schalls beim Plasmaschneiden auf, enthält man deutliche Amplituden zwischen 1.000 Hertz und 15.000 Hertz.

Beim Plasmaschneiden werden oft oxidierende Gase eingesetzt, um un- oder niedriglegierte Stähle und nichtoxidierende Gase eingesetzt, um hochlegierte Stähle oder Nichteisenmetalle zu schneiden.

Zwischen der Elektrode und der Düse strömt ein Plasmagas. Das Plasmagas wird durch ein Gasführungsteil, geführt. Dadurch kann das Plasmagas gezielt gerichtet werden. Oftmals ist es durch einen radialen und/oder axialen Versatz der Öffnungen in dem Plasmagasführungsteil in Rotation um die Elektrode versetzt. Das Plasmagasführungsteil besteht aus elektrisch isolierendem Material, da die Elektrode und die Düse voneinander elektrisch isoliert sein müssen. Dies ist notwendig, da die Elektrode und die Düse unterschiedliche elektrische Potentiale während des Betriebs des Plasmaschneidbrenners haben. Zum Betreiben des Plasmaschneidbrenners wird ein Lichtbogen zwischen der Elektrode und der Düse und/oder dem Werkstück erzeugt, der das Plasmagas ionisiert. Zum Zünden des Lichtbogens kann eine Hochspannung zwischen der Elektrode und Düse angelegt werden, die für eine Vorionisation der Strecke zwischen der Elektrode und Düse und somit für die Ausbildung eines Lichtbogens sorgt. Der zwischen Elektrode und Düse brennende Lichtbogen wird auch als Pilotlichtbogen bezeichnet.

Der Pilotlichtbogen tritt durch die Düsenbohrung aus und trifft auf das Werkstück und ionisiert die Strecke zum Werkstück. Dadurch kann sich der Lichtbogen zwischen Elektrode und Werkstück ausbilden. Dieser Lichtbogen wird auch als Hauptlichtbogen bezeichnet. Während des Hauptlichtbogens kann der Pilotlichtbogen abgeschaltet werden. Er kann aber auch weiterbetrieben werden. Beim Plasmaschneiden wird dieser oft abgeschaltet, um die Düse nicht noch zusätzlich zu belasten.

Insbesondere die Elektrode und die Düse werden thermisch hoch beansprucht und müssen gekühlt werden. Zugleich müssen sie auch den elektrischen Strom, der zur Ausbildung des Lichtbogens benötigt wird, leiten. Deshalb werden dafür gut Wärme und elektrisch gut leitende Werkstoffe, in der Regel Metalle, zum Beispiel Kupfer, Silber, Aluminium, Zinn, Zink, Eisen oder Legierungen, in denen zumindest eines dieser Metalle enthalten ist, verwendet.

Die Elektrode besteht oft aus einem Elektrodenhalter und einem Emissionseinsatz, der aus einem Werkstoff hergestellt ist, der eine hohe Schmelztemperatur (< 2000°C) und eine geringere Elektronenaustrittsarbeit als der Elektrodenhalter aufweist. Als Werkstoffe für den Emissionseinsatz werden beim Einsatz nicht oxidierende Plasmagase, wie bspw. Argon, Wasserstoff, Stickstoff, Helium und Gemische derselben, Wolfram und beim Einsatz oxidierender Gase, wie zum Beispiel Sauerstoff, Luft und Gemische derselben, Stickstoff-Sauerstoff-Gemisch und Gemische mit anderen Gasen, Hafnium oder Zirkonium eingesetzt. Der Hochtemperaturwerkstoff kann in einen Elektrodenhalter, der aus gut Wärme und elektrisch gut leitendem Werkstoff besteht, eingepasst, zum Beispiel mit Form- und/oder Kraftschluss eingepresst werden.

Die Kühlung der Elektrode und Düse kann durch Gas, zum Beispiel das Plasmagas oder ein Sekundärgas, das an der Außenseite der Düse entlangströmt, erfolgen. Effektiver ist jedoch die Kühlung mit einer Flüssigkeit, zum Beispiel Wasser. Dabei werden die Elektrode und/oder die Düse oft direkt mit der Flüssigkeit gekühlt, d.h. die Flüssigkeit befindet sich in direktem Kontakt mit der Elektrode und/oder der Düse. Um die Kühlflüssigkeit um die Düse zu führen, befindet sich um die Düse eine Düsenkappe, deren Innenfläche mit der Außenfläche der Düse einen Kühlmittelraum bildet, in dem das Kühlmittel strömt.

Bei modernen Plasmaschneidbrennern befindet sich zusätzlich außerhalb der Düse und/oder der Düsenkappe zusätzlich eine Düsenschutzkappe. Die Innenfläche der Düsenschutzkappe und die Außenfläche der Düse oder der Düsenkappe bilden einen Raum, durch den ein Sekundär- oder Schutzgas strömt. Das Sekundär- oder Schutzgas tritt aus der Bohrung der Düsenschutzkappe aus und umhüllt den Plasmastrahl und sorgt für eine definierte Atmosphäre um denselben. Zusätzlich schützt das Sekundärgas die Düse und die Düsenschutzkappe vor Lichtbögen, die sich zwischen diesem und dem Werkstück ausbilden können. Diese werden als Doppellichtbögen bezeichnet und können zur Beschädigung der Düse führen. Insbesondere beim Einstechen in das Werkstück werden die Düse und die Düsenschutzkappe durch heißes Hochspritzen von Material stark belastet. Das Sekundärgas, dessen Volumenstrom beim Einstechen gegenüber dem Wert beim Schneiden erhöht sein kann, hält das hochspritzende Material von der Düse und der Düsenschutzkappe fern und schützt so vor Beschädigung.

Die Düsenschutzkappe wird ebenfalls thermisch hoch beansprucht und muss gekühlt werden. Deshalb werden dafür gut Wärme und elektrisch gut leitende Werkstoffe, in der Regel Metalle, zum Beispiel Kupfer, Silber, Aluminium, Zinn, Zink, Eisen oder Legierungen, in denen zumindest eines dieser Metalle enthalten ist, verwendet.

Die Elektrode und die Düse können auch indirekt gekühlt werden. Dabei stehen sie mit einem Bauteil, das aus einem gut Wärme und elektrisch gut leitendem Werkstoff, in der Regel ein Metall, zum Beispiel Kupfer, Silber, Aluminium, Zinn, Zink, Eisen oder Legierungen, in denen zumindest eines dieser Metalle enthalten ist, besteht, durch Berührung in Kontakt. Dieses Bauteil wird wiederum direkt gekühlt, d.h., dass es sich mit dem meist strömenden Kühlmittel direkt in Kontakt befindet. Diese Bauteile können gleichzeitig als Halterung oder Aufnahme für die Elektrode, die Düse, die Düsenkappe oder die Düsenschutzkappe dienen und die Wärme ab- und den Strom zuführen.

Es besteht auch die Möglichkeit, dass nur die Elektrode oder nur die Düse mit Flüssigkeit gekühlt werden.

Die Düsenschutzkappe wird meist nur durch das Sekundärgas gekühlt. Es sind auch Anordnungen bekannt, bei denen die Sekundärgaskappe direkt oder indirekt durch eine Kühlflüssigkeit gekühlt wird.

Wie weiter oben beschrieben, treten beim Plasmaschneiden durch die hohe Energiedichte und die hohe Strömungsgeschwindigkeit des Plasmas bzw. des Plasmagases hohe Lärmbelastungen mit Schalldruckpegeln von teilweise über 100 dB(A) auf. Die Größe des Schalldruckpegels hängt unter anderem von der elektrischen Leistung mit der das Plasma betrieben wird bzw. vom Schneidstrom, von der Schneidstromdichte in der Düsenöffnung, der Werkstückdicke und damit der Lichtbogenlänge, der Schneidgeschwindigkeit und den verwendeten Plasma- oder Sekundärgasen ab. Mit höherer Leistung, größerem Schneidstrom, größerer Stromdichte, größerer Werkstückdicke und größerer Lichtbogenlänge steigt die Lärmbelastung an. Bei einigen Plasmaschneidtechnologien kommt zusätzlich ein sogenannter Pfeifton hinzu, der vom menschlichen Gehör als besonders unangenehm und laut empfunden wird. Dies tritt besonders dann auf, wenn das Plasmagas beispielsweise durch eine entsprechende Plasmagasführung in eine hohe Rotation versetzt wird.

Laserschneidköpfe bestehen im Wesentlichen aus einem Körper, einem optischen System in dem Körper zur Fokussierung des Laserstrahls, Anschlüssen für die Laserlichtzuführung bzw. den Lichtwellenleiter, Gas (Schneidgas und Sekundärgas) und Kühlmedium und einer Düse mit einer Öffnung, die den Gasstrahl des Schneidgases formt und durch die auch der Laserstrahl aus dem Laserschneidkopf austritt. Der Laserstrahl trifft auf ein Werkstück und wird absorbiert. In Kombination mit dem Schneidgas wird das erhitzte Werkstück aufgeschmolzen und ausgetrieben (Laserschmelzschneiden) oder oxidiert (Laserbrennschneiden).

Es ist beim Laserschneidkopf möglich, dass sich zusätzlich außerhalb der Düse eine Düsenschutzkappe befindet. Die Innenfläche der Düsenschutzkappe und die Außenfläche der Düse oder der Düsenkappe bilden einen Raum, durch den ein Sekundär- oder Schutzgas strömt. Das Sekundär- oder Schutzgas tritt aus der Bohrung der Düsenschutzkappe aus und umhüllt den Laserstrahl und sorgt für eine definierte Atmosphäre um denselben. Zusätzlich schützt das Sekundärgas die Düse. Insbesondere beim Einstechen in das Werkstück wird die Düse durch heißes Hochspritzen von Material stark belastet. Das Sekundärgas, dessen Volumenstrom beim Einstechen gegenüber dem Wert beim Schneiden erhöht sein kann, hält das hochspritzende Material von der Düse fern und schützt so vor Beschädigung.

Beim Austritt des Gasstrahls aus der Düsenöffnung kommt es insbesondere bei großen Volumenströmen des Schneidgases ebenfalls zu hohen Lärmbelastungen. Hohe Volumenströme werden besonders beim Laserschmelzschneiden bspw. von hochlegierten Stählen und Aluminium benötigt.

Bearbeitungsköpfe, in denen sowohl das Plasma- als auch Laserstrahlschneiden gleichzeitig zum Einsatz kommen, sogenannte Plasma-Laser-Schneidköpfe, weisen Merkmale des Plasmbrennerkopfes und des Laserschneidkopfes auf. Hier werden die Merkmale und damit auch die Vorteile beider Schneidverfahren miteinander kombiniert.

Lärm kann Gesundheitsschäden verursachen. Ziel der Erfindung ist es die Lärmbelastung beim Plasma-, beim Laserschneiden (Laserstrahlschneiden) (mit Prozessgas) und beim Plasma-Laser-Schneiden zu reduzieren, nach Möglichkeit ohne die Schneidgeschwindigkeit und Schnittqualität zu verschlechtern.

Erfindungsgemäß wird diese Aufgabe gelöst durch eine Düse für einen Plasmabrennerkopf, Laserschneidkopf oder Plasma-Laser-Schneidkopf, umfassend einen Körper mit einer Längsachse M, einem vorderen Ende, einem hinteren Ende und einer Düsenöffnung am vorderen Ende, wobei die Düsenöffnung am vorderen Ende, vom vorderen Ende her gesehen, in Längsschnittansicht mindestens folgende Abschnitte umfasst: einen sich entlang der Längsachse M erstreckenden, sich in Richtung des hinteren Endes verjüngenden ersten Abschnitt A1 mit einer Innenfläche und einer Körperkante am vorderen Ende und einen sich entlang der Längsachse M erstreckenden zweiten Abschnitt A3 mit einer Innenfläche und einer Körperkante am Übergang vom ersten Abschnitt A1 zum zweiten Abschnitt A3, wobei entweder sich der erste Abschnitt A1 nicht über seine gesamte Länge linear verjüngt und eine virtuelle Verbindungslinie V1 zwischen der Körperkante der Düsenöffnung am vorderen Ende und der Körperkante am Übergang vom ersten Abschnitt A1 zum zweiten Abschnitt A3 und die Längsachse M einen Winkel $\alpha1$ in einem Bereich von 15° bis 40°, bevorzugter in einem Bereich von 20° bis 38° °, noch bevorzugter in einem Bereich von 20° bis 35° und am bevorzugtesten in einem Bereich von 25° bis 35°, einschließen und/oder die Innenfläche (211) des ersten Abschnitts $A_1$ und die Längsachse M einen Winkel $\alpha$ in einem Bereich von 10° bis 30°, bevorzugter in einem Bereich von 12° bis 30°, noch bevorzugter in einem Bereich von 14° bis 25°, noch bevorzugter in einem Bereich von 15° bis 20°, und am bevorzugtesten im Bereich von 17° bis 20° einschließen, und entweder eine virtuelle Verbindungslinie V3 zwischen der Körperkante (203) am Übergang vom ersten Abschnitt A1 zum zweiten Abschnitt A3 und der Körperkante (205) am Übergang vom zweiten Abschnitt A3 zum dritten Abschnitt A5 und die Längsachse M einen Winkel $\gamma1$ in einem Bereich von 0° bis 8°, bevorzugt 5°, einschließen und sich in Richtung zum hinteren Ende (28) erweitert oder in einem Bereich von 172° bis 180°, bevorzugt 175°, einschließen und sich in Richtung zum hinteren Ende (28) verjüngt oder parallel zur Längsachse M verläuft oder sich die Innenfläche (220) des zweiten Abschnitts $A_3$ unter einem Winkel $\gamma$ in einem Bereich von 0° bis 8°, bevorzugt 5°, in Richtung zum hinteren Ende (28) erweitert oder unter einem Winkel in einem Bereich von 172° bis 180°, bevorzugt 175°, in Richtung zum hinteren Ende (28) verjüngt oder parallel zur Längsachse M verläuft .

Erfindungsgemäß ist die Erfindung so vorgesehen, dass sich am Übergang oder vor oder unmittelbar vor dem Übergang vom ersten Abschnitt A1 zum zweiten Abschnitt A3 mindestens eine weitere sich unter einem Winkel $\beta$ zur Längsachse M in einem Bereich von 45° bis 120°, bevorzugter in einem Bereich von 60° bis 110°, noch bevorzugter in einem Bereich von 80° bis 100°, noch bevorzugter in einem Bereich von 85° bis 95°, am bevorzugtesten senkrecht erstreckende Innenfläche 213 befindet. Die Innenfläche 213 befindet sich zwischen der Körperkante 203 und der Innenfläche 211, wobei ein Übergang stufig oder stetig erfolgen kann.

Vorteilhafterweise ist, vom vorderen Ende her gesehen, nach dem zweiten Abschnitt A3 ein sich entlang der Längsachse M erstreckender, sich in Richtung des hinteren Endes erweiternder dritter Abschnitt A5 mit einer Innenfläche vorhanden.

Insbesondere kann dabei vorgesehen sein, dass die Innenfläche des dritten Abschnitts A5 zumindest einen sich entlang der Längsachse M in Richtung des hinteren Endes erweiternden Bereich aufweist, dessen Innenfläche und die Längsachse M einen Winkel $\delta$ in einem Bereich von 30° bis 90°, bevorzugter in einem Bereich von 40° bis 75° einschließen.

Alternativ kann dabei vorgesehen sein, dass, vom vorderen Ende her gesehen, nach dem dritten Abschnitt A5 ein vierter Abschnitt A7 mit einer Innenfläche vorhanden ist und eine virtuelle Verbindungslinie V4 zwischen der Körperkante am Übergang vom zweiten Abschnitt A3 zum dritten Abschnitt A5 und der Körperinnenkante am Übergang vom dritten Abschnitt A5 zum vierten Abschnitt A7 und die Längsachse M einen Winkel $\delta1$ in einem Bereich von 30° bis 90°, bevorzugter in einem Bereich von 40° bis 75° einschließen und/oder die Innenfläche (224) des dritten Abschnitts A5 und die Längsachse M einen Winkel $\delta$ in einem Bereich von 30° bis 90°, bevorzugter in einem Bereich von 40° bis 75°, einschließen.

Wiederum alternativ kann vorgesehen sein, dass vom vorderen Ende 22 her gesehen, nach dem dritten Abschnitt A5 ein vierter Abschnitt A7 mit einer Innenfläche vorhanden ist, wobei die Innenfläche 227 des vierten Abschnitts A7 zumindest einen Bereich aufweist, der sich unter einem Winkel $\varepsilon$ zur Längsachse M in einem Bereich von 0° bis 10°, bevorzugt 5°, in Richtung zum hinteren Ende 28 erweitert oder unter einem Winkel in einem Bereich von 170° bis 180°, bevorzugt 175°, in Richtung zum hinteren Ende 28 verjüngt oder parallel zur Längsachse M verläuft, oder wobei sich die Innenfläche 227 des vierten Abschnitts A7 unter einem Winkel $\varepsilon$ zur Längsachse M in einem Bereich von 0° bis 10°, bevorzugt 5°, in Richtung zum hinteren Ende 28 erweitert oder unter einem Winkel in einem Bereich von 170° bis 180°, bevorzugt 175°, in Richtung zum hinteren Ende 28 verjüngt oder parallel zur Längsachse M verläuft.

Insbesondere kann dabei vorgesehen sein, dass, vom vorderen Ende her gesehen, nach dem dritten Abschnitt A5 ein vierter Abschnitt A7 mit einer Innenfläche vorhanden ist, wobei sich die Innenfläche des vierten Abschnitts A7 unter einem Winkel $\varepsilon$ zur Längsachse M in einem Bereich von 0° bis 10°, bevorzugt 5°, in Richtung zum hinteren Ende erweitert oder unter einem Winkel in einem Bereich von 170° bis 180°, bevorzugt 175°, in Richtung zum hinteren Ende verjüngt oder parallel zur Längsachse M verläuft.

In einer weiteren besonderen Ausführungsform verjüngt sich der erste Abschnitt A1, vom vorderen Ende her gesehen, konisch, konvex oder konkav

und/oder

verjüngt oder erweitert sich der zweite Abschnitt A3 konisch, konvex oder konkav
und/oder
erweitert sich der dritte Abschnitt A5 konisch, konvex oder konkav
und/oder
verjüngt oder erweitert sich der vierte Abschnitt A7 konisch, konvex oder konkav.

In einer besonderen Ausführungsform verjüngt sich der erste Abschnitt A1, vom vorderen Ende her gesehen, stetig oder unstetig und/oder

verjüngt oder erweitert sich der zweite Abschnitt A3 stetig oder unstetig und/ oder
erweitert sich der dritte Abschnitt A5 stetig oder unstetig und/ oder
verjüngt oder erweitert sich der vierte Abschnitt A7 stetig oder unstetig.

In einer weiteren besonderen Ausführungsform verjüngt sich der erste Abschnitt A1, vom vorderen Ende her gesehen, stufig und/oder

verjüngt oder erweitert sich der zweite Abschnitt A3 stufig und/oder senkrecht zur Längsachse M und/oder
erweitert sich der dritte Abschnitt A5 stufig und/oder senkrecht zur Längsachse M und/oder
verjüngt oder erweitert sich der vierte Abschnitt A7 stufig und/oder senkrecht zur Längsachse M.

Zweckmäßigerweise folgen

der erste Abschnitt A1 und der zweite Abschnitt A3 oder

der zweite Abschnitt A3 und der dritte Abschnitt A5 oder

der dritte Abschnitt A5 und der vierte Abschnitt A7 oder

der erste Abschnitt A1, der zweite Abschnitt A3 und der dritte Abschnitt A5 oder

der zweite Abschnitt A3, der dritte Abschnitt A5 und der vierte Abschnitt A7 oder

der erste Abschnitt A1, der zweite Abschnitt A3, der dritte Abschnitt A5 und der vierte Abschnitt A7

unmittelbar aufeinander.

Vorteilhafterweise ist/sind eine größte Querschnittsfläche A10 des ersten Abschnitts A1 und/oder eine größte unmittelbar am vorderen Ende der Düsenöffnung befindliche Querschnittsfläche der Düsenöffnung mindestens 1,7, vorzugsweise 2,1, mal größer und/oder maximal 4,0, vorzugsweise 3,7, mal größer als eine kleinste Querschnittsfläche A30, A31 des zweiten Abschnitts A3 und/oder eine kleinste Querschnittsfläche A30, A31 der Düsenöffnung.

Günstigerweise ist/sind ein größter Durchmesser D1 des ersten Abschnitts A1 und/oder ein größter unmittelbar am vorderen Ende der Düsenöffnung befindlicher Durchmesser D1 der Düsenöffnung mindestens 1,3, vorzugsweise 1,45, mal größer und/oder maximal 2,1, vorzugsweise 1,9, mal größer als ein kleinster Durchmesser D3 des zweiten Abschnitts A3 und/oder ein kleinster Durchmesser D3 der Düsenöffnung.

Bevorzugt ist/sind ein größter Durchmesser D1 des ersten Abschnitts A1 und/oder ein größter unmittelbar am vorderen Ende der Düsenöffnung befindlicher Durchmesser D1 der Düsenöffnung mindestens 0,5 mm, vorzugsweise 0,6 mm, größer und/oder maximal 1,2 mm, vorzugsweise 1,0 mm, größer als ein kleinster Durchmesser D3 des zweiten Abschnitts A3 und/oder ein kleinster Durchmesser D3 der Düsenöffnung.

Vorteilhafterweise beträgt der Quotient L1/L3 der sich entlang der Längsachse M erstreckenden Länge L1 des ersten Abschnitts A1 und der sich entlang der Längsachse M erstreckenden Länge L3 des zweiten Abschnitts A3 zwischen 0,5 bis 1,2, vorzugsweise zwischen 0,65 und 1.

Vorzugsweise ist der Quotient L5/L1 der sich entlang der Längsachse M erstreckenden Länge L5 des dritten Abschnitts A3 und der sich entlang der Längsachse M erstreckenden Länge L1 des ersten Abschnitts A1 kleiner oder gleich 1,5, vorzugsweise kleiner oder gleich 1,25.

Bevorzugt ist der Quotient L5/L3 der sich entlang der Längsachse M erstreckenden Länge L5 des dritten Abschnitts A3 und der sich entlang der Längsachse erstreckenden Länge L3 des zweiten Abschnitts A3 kleiner oder gleich 1,25, vorzugsweise kleiner oder gleich 1.

In einer besonderen Ausführungsform gilt für die Längen der ersten, zweiten, dritten und vierten Abschnitte:

$L1 <= 2$ mm, $L3 <= 3$ mm, $L5 <= 2$ mm und $L7 <= 3$ mm, vorzugsweise

$L1 <= 1$ mm, $L3 <= 1{,}5$ mm, $L5 <= 1{,}5$ mm und $L7 <= 2{,}5$ mm.

Vorteilhafterweise beträgt der Quotient $L3/D3$ der sich entlang der Längsachse M erstreckenden Länge $L3$ des zweiten Abschnitts A3 und des Durchmessers $D3$ des zweiten Abschnitts A3 zwischen 0,6 und 1,7, vorzugsweise zwischen 0,65 und 1,55.

Zweckmäßigerweise ist ein größter Durchmesser $D7$ des vierten Abschnitts A5 mindestens genauso groß und maximal doppelt so groß wie ein bzw. der größte(r) Durchmesser $D1$ des ersten Abschnitts A1 und/oder ein bzw. der größte unmittelbar am vorderen Ende der Düsenöffnung 24 befindliche Durchmesser $D1$ der Düsenöffnung.

Vorteilhafterweise ist ein durch die Innenfläche(n) des ersten Abschnitts A1 gebildetes Volumen $V10$ größer, bevorzugt mindestens 1,3 mal größer und/oder maximal 2,5 mal größer, noch bevorzugter maximal 2,2 mal größer als ein durch die Innenfläche des zweiten Abschnitts A3 gebildetes Volumen $V30$.

Zweckmäßigerweise ist am Übergang vom ersten Abschnitt A1 zum zweiten Abschnitt A3 der Durchmesser $D3$ des zweiten Abschnitts A3 mindestens 0,2 mm und/oder maximal 0,6 mm kleiner als der Durchmesser $D2$ und/oder der kleinste Durchmesser $D2$ des ersten Abschnitts A1.

Günstigerweise ist bei der Anordnung zwischen der Außenfläche 23 der Düse und der Innenfläche 62 der Düsenschutzkappe 6 eine Düsenkappe 5 angeordnet.

Vorteilhafterweise weist die Öffnung 64 der Düsenschutzkappe 6 eine größere Querschnittsfläche $A60$ als die Querschnittsfläche $A10$ der Düse 2, vorzugsweise eine Querschnittsfläche $A60$, die gleich groß oder größer ist als eine durch die verlängerte virtuelle Verbindungslinie $V1$ projizierte virtuelle Fläche $A70$ der Düse 2 auf die Düsenschutzkappe 6, auf oder einen größeren Durchmesser $D6$ als der Durchmesser $D1$ der Düse 2, vorzugsweise einen Durchmesser $D6$ auf, der gleich groß oder größer ist als der Durchmesser $D70$ einer durch die verlängerte virtuelle Verbindungslinie $V1$ projizierten virtuellen Fläche $A70$ der Düse 2 auf die Düsenschutzkappe 6 ist und/oder weist die Öffnung 64 der Düsenschutzkappe 6 eine größere Querschnittsfläche $A60$ als die Querschnittsfläche $A10$ der Düse (2), vorzugsweise eine Querschnittsfläche $A60$, die gleich groß oder größer ist als eine durch die verlängerte virtuelle Verbindungslinie $V2$ projizierte virtuelle Fläche $A80$ der Düse 2 auf die Düsenschutzkappe 6, auf oder einen größeren Durchmesser $D6$ als der Durchmesser $D1$ der Düse 2, vorzugsweise, einen Durchmesser $D6$ auf, der gleich groß oder größer ist als der Durchmesser $D80$ eine durch die verlängerte virtuelle Verbindungslinie $V2$ projizierten virtuellen Fläche $A80$ der Düse 2 auf die Düsenschutzkappe 6.

Zweckmäßigerweise ist die Länge $L1$ und/oder die Länge $L3$ und/oder die Summe der Längen $L1$ und $L3$ der ersten und zweiten Abschnitte A1 und A3 der Düse größer als die Länge des kürzesten Abstandes $L61$ zwischen der Außenfläche 23 des vorderen Endes der Düse und der Innenfläche 62 der Düsenschutzkappe.

Günstigerweise ist die Düse oder die Düsenkappe von der Düsenschutzkappe durch eine Gasführung, die Öffnungen enthält, voneinander elektrisch isoliert angeordnet. Vorteilhafterweise sind die Öffnungen der Gasführung radial zur Längsachse M zur Längsachse M oder zur Radialen der Längsachse M versetzt oder geneigt oder parallel zur Längsachse M oder geneigt zur Längsachse M angeordnet.

In einer besonderen Ausführungsform der Anordnung umfasst diese eine Elektrode, wobei die Elektrode einen Elektrodenhalter und einen Emissionseinsatz am vorderen Ende der Elektrode umfasst, sich der Emissionseinsatz s entlang der Längsachse M mit der Düsenöffnung fluchtend erstreckt, das vordere Ende der Elektrode im Innenraum der Düse angeordnet ist, wobei der Abstand $L13$ zwischen der Außenfläche des vorderen Endes der Elektrode und dem Abschnitt A3 der Düsenöffnung mindestens 1,5 mal größer ist als die Länge $L1$ des ersten Abschnitts A1 und/oder als die Länge $L3$ des zweiten Abschnitts A3 und/oder die Summe der Längen $L1$ und $L3$ der ersten und zweiten Abschnitte A1 und A3 der Düse ist.

Vorteilhafterweise sind die Düse und die Elektrode durch eine Gasführung, die Öffnungen enthält, voneinander elektrisch isoliert beabstandet angeordnet. Insbesondere kann die Gasführung Öffnungen enthalten.

Insbesondere kann vorgesehen sein, dass die Öffnungen radial zur Längsachse M zur Längsachse M oder zur Radialen der Längsachse M versetzt oder geneigt oder parallel zur Längsachse M oder geneigt zur Längsachse M angeordnet sind.

Vorteilhafterweise umfasst die Elektrode einen Elektrodenhalter und einen Emissionseinsatz, wobei der Emissionseinsatz am vorderen Ende der Elektrode nicht aus dem Elektrodenhalter herausragt.

Der Erfindung liegt die überraschende Erkenntnis zugrunde, dass die neue Geometrie der Düse im relevanten Frequenzbereich die beste Reduzierung des Schalldrucks (und zwar in der Größenordnung von bis zu 15 dB(A), also beispielsweise von 105-110 dB(A) auf bis zu 90-95 dB(A) bringen. Ursächlich dafür scheint nach bisherigen Erkenntnissen die Verschiebung der lärmerzeugenden Geometrie der Düse (Strömungs-Abrisskante am Düsenkanalausgang) zu sein. Der Lärm wird vermutlich durch die kontinuierliche Expansion des Lichtbogens und/oder des Gases bei Austritt aus der Düse erzeugt und die dabei entstehenden Frequenzen sind stark von der Austrittsgeschwindigkeit an der Körperkante (203) der Düse abhängig, welche dabei als Abrisskante für den Plasmalichtbogen fungiert. Da Körperkante jetzt innerhalb der Düse angeordnet ist, werden die durch die Expansion des Plasmabogens und/oder des Gasstrahls entstehenden Schallwellen zum einen gebrochen und auch durch das weiterhin anliegende Plasma gedämpft. Auch die Austrittsgeschwindigkeit des Plasmastrahls kann durch die beanspruchte Geometrie, wie z. B. spezielle Senkung, am vorderen Ende der Düse so verändert worden sein, dass es deutlich weniger Lärm gibt und das bei nahezu gleichbleibender Schnittqualität. Gleichzeitig wird überraschenderweise eine Verlängerung der Lebensdauer der Düse erreicht. Es wird vermutet, dass dies durch die Verlegung der Abrisskante vom Düsenkanalausgang in die Düsenöffnung hinein und die damit verbundene Verkürzung des Abschnittes mit dem kleinsten Düsenkanaldurchmesser bzw. Düsenöffnungsdurchmesser erreicht wird. So ist der heiße Plasmastahl nur über einen kürzeren Abschnitt mit der Innenfläche der Düsenöffnung in Kontakt. Außerdem ist die sogenannt Abrisskante vor Beschädigung durch äußere Einflüsse, beispielsweise vor Metallspritzern beim Einstechen in das zu schneidende Material, besser geschützt.

Weitere Merkmale und Vorteile der Erfindung ergeben sich aus den beigefügten Ansprüchen und der nachfolgenden Beschreibung von Ausführungsbeispielen anhand der schematischen Zeichnungen. Dabei zeigt:

Figur 1 eine Schnittansicht und eine geschnittene Detailansicht (oben) des vorderen Endes einer Düse gemäß einer besonderen Ausführungsform der Erfindung;

Figur 2 eine geschnittene Detailansicht des vorderen Endes einer Düse gemäß einer besonderen Ausführungsform der Erfindung (Winkel $\beta$=120°);

Figur 3 eine geschnittene Detailansicht des vorderen Endes einer Düse gemäß einer besonderen Ausführungsform der Erfindung (Winkel $\beta$=60°);

Figur 4 eine geschnittene Detailansicht des vorderen Endes einer Düse gemäß einem Beispiel, welches nicht in den Schutzbereich der Erfindung fällt. (Abschnitt A1 konkav verjüngend, $\alpha$1=32°);

Figur 5 eine geschnittene Detailansicht des vorderen Endes einer Düse gemäß einer besonderen Ausführungsform der Erfindung (Abschnitt A1 konvex verjüngend, $\alpha$1=32°);

Figur 5.1 eine geschnittene Detailansicht des vorderen Endes einer Düse gemäß einer besonderen Ausführungsform der Erfindung (Abschnitt A1 konvex verjüngend, $\alpha$1=32°);

Figur 6 eine geschnittene Detailansicht des vorderen Endes einer Düse gemäß einer besonderen Ausführungsform der Erfindung (Abschnitt A1 stufig verjüngend, $\alpha$1= 32°);

Figur 7 eine geschnittene Detailansicht des vorderen Endes einer Düse gemäß einer besonderen Ausführungsform der Erfindung (Abschnitt A3 konisch erweiternd $\gamma$=5°);

Figur 7.1 eine geschnittene Detailansicht des vorderen Endes einer Düse gemäß einer besonderen Ausführungsform der Erfindung (Abschnitt A3 konkav erweiternd $\gamma$1=5°);

Figur 7.2 eine geschnittene Detailansicht des vorderen Endes einer Düse gemäß einer besonderen Ausführungsform der Erfindung (Abschnitt A3 konvex erweiternd $\gamma$1=5°);

Figur 8 eine geschnittene Detailansicht des vorderen Endes einer Düse gemäß einem Beispiel, welches nicht in den Schutzbereich der Erfindung fällt (Abschnitt A3 konisch verjüngend Y=175°);

Figur 8.1 eine geschnittene Detailansicht des vorderen Endes einer Düse gemäß einem Beispiel, welches nicht in den Schutzbereich der Erfindung fällt Abschnitt A3 konvex verjüngend $\gamma$1=175°);

Figur 8.2 eine geschnittene Detailansicht des vorderen Endes einer Düse gemäß einem Beispiel, welches nicht in den Schutzbereich der Erfindung fällt (Abschnitt A3 konkav verjüngend $\gamma$1=175°);

Figur 9 eine geschnittene Detailansicht des vorderen Endes einer Düse gemäß einer besonderen Ausführungsform der Erfindung (Abschnitt A5 konisch erweiternd $\delta$=80°);

Figur 9.1 eine geschnittene Detailansicht des vorderen Endes einer Düse gemäß einer besonderen Ausführungsform der Erfindung (Abschnitt A5 konkav erweiternd $\delta$1=45°);

Figur 9.2 eine geschnittene Detailansicht des vorderen Endes einer Düse gemäß einer besonderen Ausführungsform der Erfindung (Abschnitt A5 konvex erweiternd $\delta$1=45°);

Figur 9.3 eine geschnittene Detailansicht des vorderen Endes einer Düse gemäß einer besonderen Ausführungsform der Erfindung (Abschnitt A5 konkav erweiternd $\delta$1=45°);

Figur 10 eine geschnittene Detailansicht des vorderen Endes einer Düse gemäß einer besonderen Ausführungsform der Erfindung (Abschnitt A7 konisch erweiternd $\varepsilon$=5°);

Figur 11 eine geschnittene Detailansicht des vorderen Endes einer Düse gemäß einer besonderen Ausführungsform der Erfindung (Abschnitt A7, konisch verjüngend $\varepsilon$ = 175°);

Figur 12 beispielhaft eine geschnittene Detailansicht und eine vergrößerte geschnittene Detailansicht (unten) des vorderen Endes einer Düse gemäß einer besonderen Ausführungsform der Erfindung zur Verdeutlichung der Flächen A10 und A20.

Figur 13 und Figur 13a beispielhaft zwei vergrößerte geschnittene Detailansichten des vorderen Endes einer Düse gemäß einer besonderen Ausführungsform der Erfindung zur Verdeutlichung der Flächen A30 und A31.

Figur 14 beispielhaft eine vergrößerte geschnittene Detailansicht des vorderen Endes einer Düse gemäß einer besonderen Ausführungsform der Erfindung zur Verdeutlichung des Volumens V10.

Figur 15 beispielhaft eine vergrößerte geschnittene Detailansicht des vorderen Endes 22 der zur Verdeutlichung des Volumens V30.

Figur 16 eine Schnittdarstellung eines Plasmabrennerkopfes;

Figur 17 eine Schnittdarstellung einer Anordnung aus einer Düse, einer Düsenkappe, einer Düsenschutzkappe und einer Gasführung;

Figur 17a eine vergrößerte Detailansicht der Anordnung aus einer Düse und einer Düsenschutzkappe zur Verdeutlichung der projizierten Kreisfläche A70

Figur 18 eine Schnittdarstellung einer Anordnung aus einer Düse, einer Düsenschutzkappe und einer Gasführung;

Figur 18a eine vergrößerte Detailansicht der Anordnung aus einer Düse und einer Düsenschutzkappe zur Verdeutlichung der projizierten Kreisfläche A80 Figur 20 beispielhaft eine Gasführung für Sekundärgas;

Figur 19 eine Schnittdarstellung einer Anordnung aus einer Düse, einer Elektrode und einer Gasführung;

Figur 21 beispielhaft eine Gasführung für Plasmagas

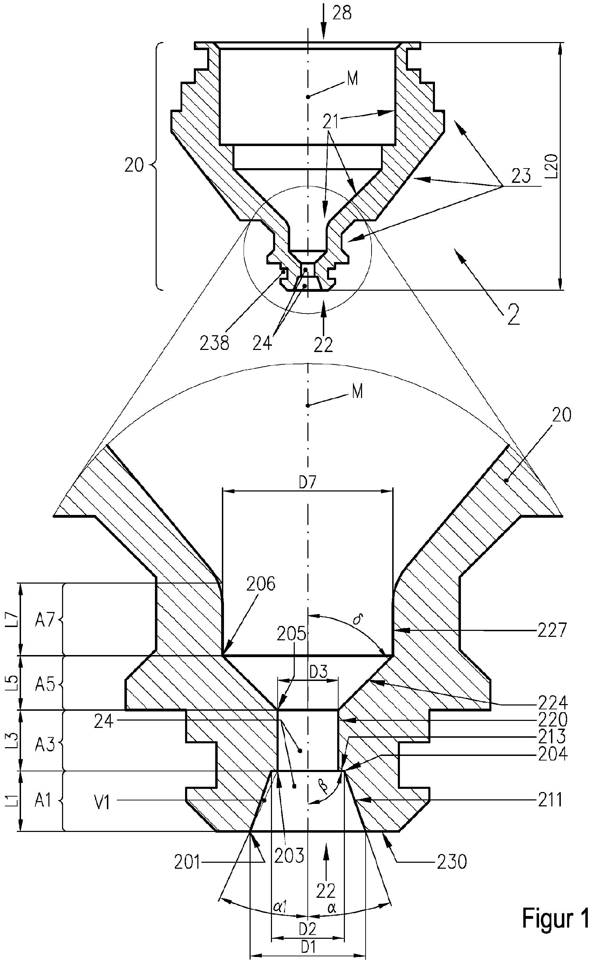

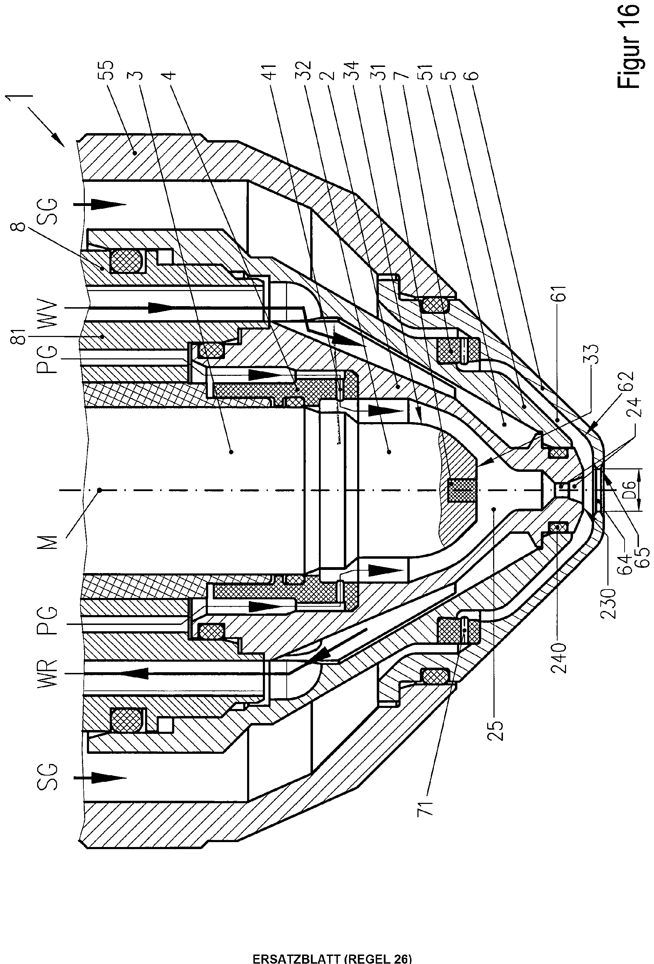

Die in Figur 1 in Schnittansicht (oben) und geschnittener Detailansicht (unten) gezeigte Düse 2 für einen Plasmalichtbogenbrenner umfasst einen Körper 20 mit einer Gesamtlänge L20, der sich entlang einer Längsachse M erstreckt, einer Innenfläche 21 und einer Außenfläche 23, einem vorderen Ende 22 und einem hinteren Ende 28 und einer Düsenöffnung 24 am vorderen Ende 22. Zudem weist der Körper 20 an seinem vorderen Ende 22 eine Nut 238 auf. In der Nut 238 befindet sich, wenn die Düse 2 in den Plasmalichtbogenbrenner eingebaut ist, ein Rundring 240 (siehe Figur 16) zur Abdichtung des Raumes zwischen Düse 2 und Düsenkappe 5 (siehe Figur 16).

Die Innenfläche 21 des Körpers 20 der Düse 2 weist vom vorderen Ende 22 (Düsenöffnung 24) her einen sich entlang der Längsachse M erstreckenden ersten Abschnitt A1 auf, der sich zunächst konisch mit einem Winkel $\alpha$ zwischen seiner Innenfläche 211 und der Längsachse M, hier beispielhaft ca. 19°, über eine Länge L1, beispielhaft 1,0 mm, verjüngt, und dann einen Vorsprung in Richtung der Längsachse M, der zwischen seiner Innenfläche 213 und der Längsachse M einen Winkel $\beta$ bildet, hier beispielhaft 90°, auf. Die Düsenöffnung 24 hat unmittelbar an vorderen Ende 22 einen Durchmesser D1, hier beispielhaft 1,9 mm und am Ende des konischen Bereiches der Innenfläche 211 des ersten Abschnitts A1 einen Durchmesser D2, hier beispielhaft 1,2 mm. Durch den Vorsprung, hier beispielhaft 0,1 mm, verringert sich der Durchmesser der Düsenöffnung 24 dann auf D3, hier beispielhaft 1,0 mm.

Unmittelbar daran schließt sich der zweite Abschnitt A3 mit dem Durchmesser D3 und einer Länge L3, beispielhaft 1,0 mm, an, der eine zylindrische Innenfläche 220 aufweist. An diesen Abschnitt schließt sich der dritte Abschnitt A5 an, dessen Innenfläche 224 sich konisch mit einem Winkel $\delta$ zwischen seiner Innenfläche 224 und der Längsachse M, hier beispielhaft 45°, vom Durchmesser D3 auf den Durchmesser D7, hier beispielhaft 2,8 mm, erweitert. Dieser Abschnitt erstreckt sich entlang der Längsachse M über die Länge L5, hier beispielhaft 0,9 mm. Daran schließt sich der der vierte Abschnitt A7 mit dem Durchmesser D7 an, der eine zylindrische Innenfläche 227 mit einer Länge L7, beispielhaft 1,2 mm aufweist. Danach schließt sich ein weiterer Bereich an, der sich konisch erweitert.

Mit D1 = 1,9 mm und D3 = 1,0 mm beträgt D1 das 1,9-fache des Durchmessers D3. Der Durchmesser D1 ist 0,9 mm größer als der Durchmesser D3.

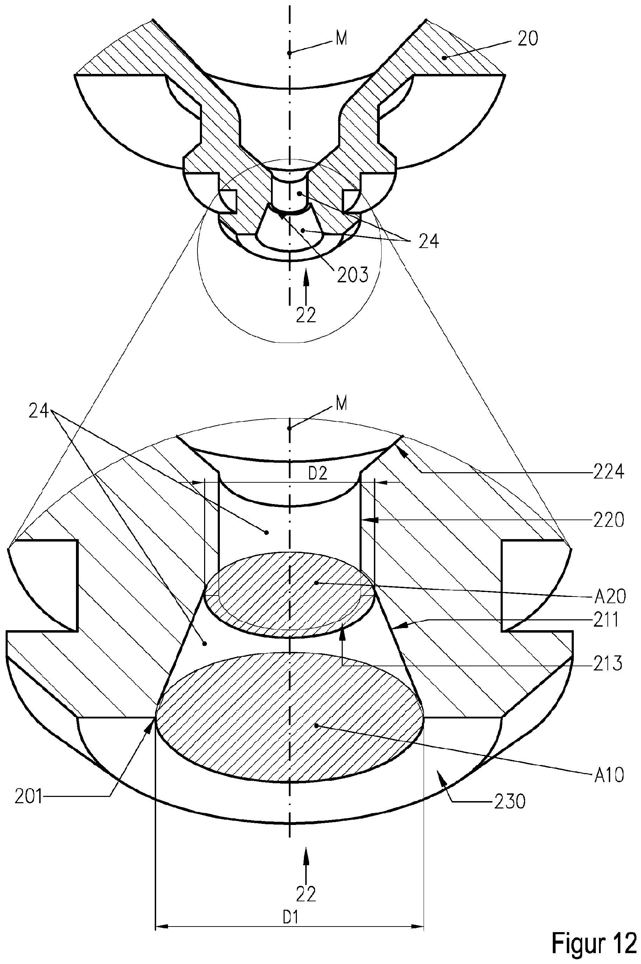

Die durch den Durchmesser D1 des ersten Abschnitts A1 unmittelbar am vorderen Ende 22 der Düsenöffnung 24 senkrecht zur Längsachse M gebildete Fläche A10, die in Figur 12 dargestellt ist, beträgt ca. 2,8 mm$^2$, ermittelt nach

$$[A10 = 3,141 / 4 * D1^2].$$

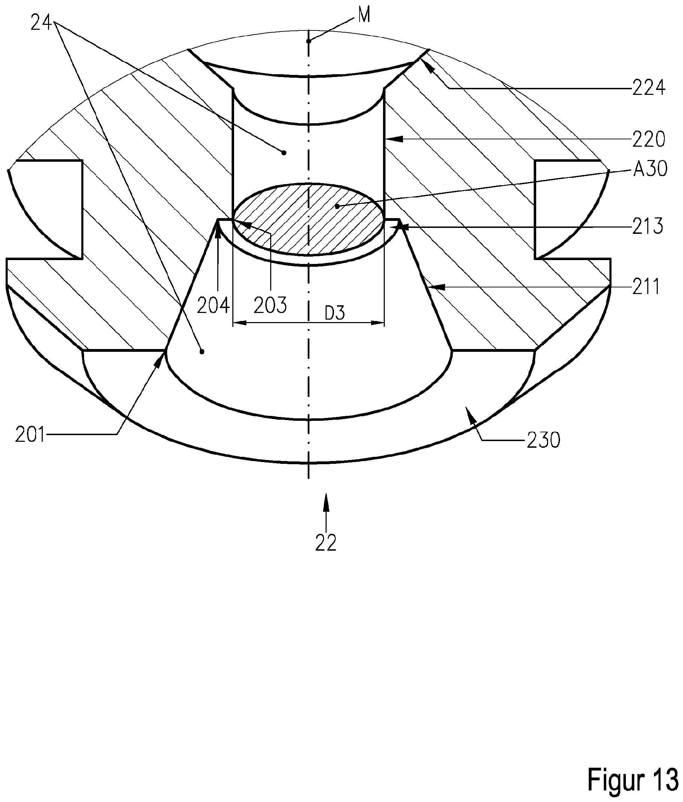

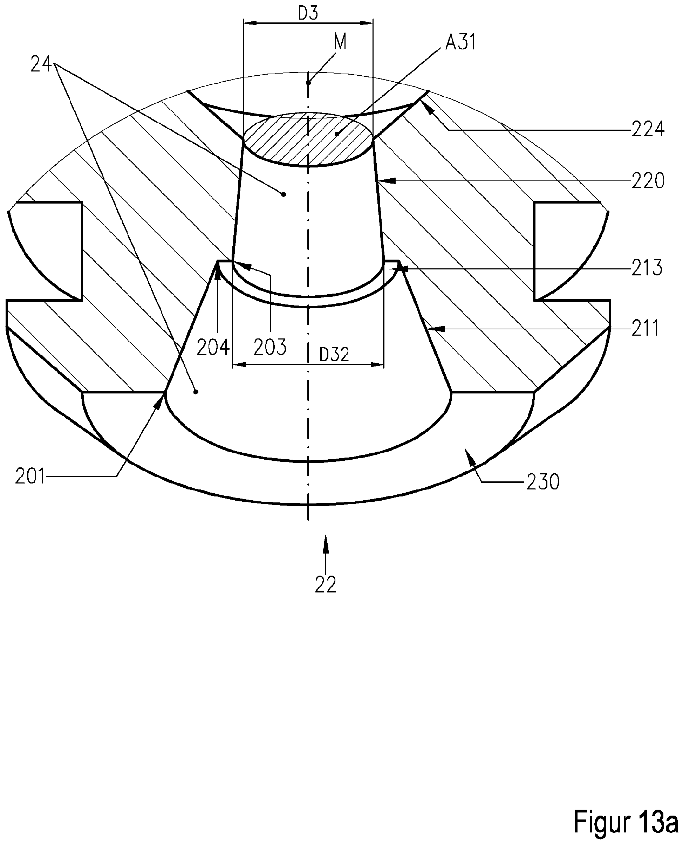

Die durch den kleinsten Durchmessers D3 des zweiten Abschnitts A3 der Düsenöffnung 24 senkrecht zur Längsachse M gebildete Fläche A30, die in Figur 13 dargestellt ist, beträgt ca. 0,8 mm$^2$, ermittelt nach

$$[A30 = 3,141 / 4 * D3^2].$$

Die Fläche A10 beträgt damit das ca. 3,6-fache der Fläche A30.

Die Länge L1 = 1,0 mm des ersten Abschnitts A1 und die Länge L3 = 1,0 mm A3 des zweiten Abschnitts ergeben ein Verhältnis von L1/L3 = 1. Der Quotient der Länge L3 und des Durchmessers D3 des zweiten Abschnitts A3 beträgt ebenfalls 1. Weiterhin ist der Durchmesser D1= 1,9 mm kleiner als der Durchmesser D7 = 2,8 mm.

Figur 1 zeigt weiterhin eine virtuelle Verbindungslinie V1, die sich zwischen der Körperkante 201 der Düsenöffnung 24 mit dem Durchmesser D1 am vorderen Ende 22 und der Körperkante 203 am Übergang vom ersten Abschnitt A1 zum zweiten Abschnitt A3 der Düsenöffnung 24 mit dem Durchmesser D3 erstreckt. Der durch die Verbindungslinie V1 und die Längsachse M eingeschlossene Winkel $\alpha 1$ beträgt ca. 24°.

Das durch die Innenflächen 211 und 213 gebildete Volumen V10 der Düsenöffnung 24 des ersten Abschnitts A1 beträgt ca. 1,9 mm$^3$, errechnet nach

$$[V10 = 3{,}141 * L1/3 * ((D1/2)^2 + (D1/2*D2/2) + (D2/2)^2].$$

Das durch die Innenfläche 220 gebildete Volumen V30 der Düsenöffnung 24 des zweiten Abschnitts A3 beträgt ca. 0,8 mm$^3$, errechnet nach [V30 = 3,141 * (D3/2)$^2$ * L3]. Damit ist Volumen V10 ca. 1,9-mal größer als Volumen V30.

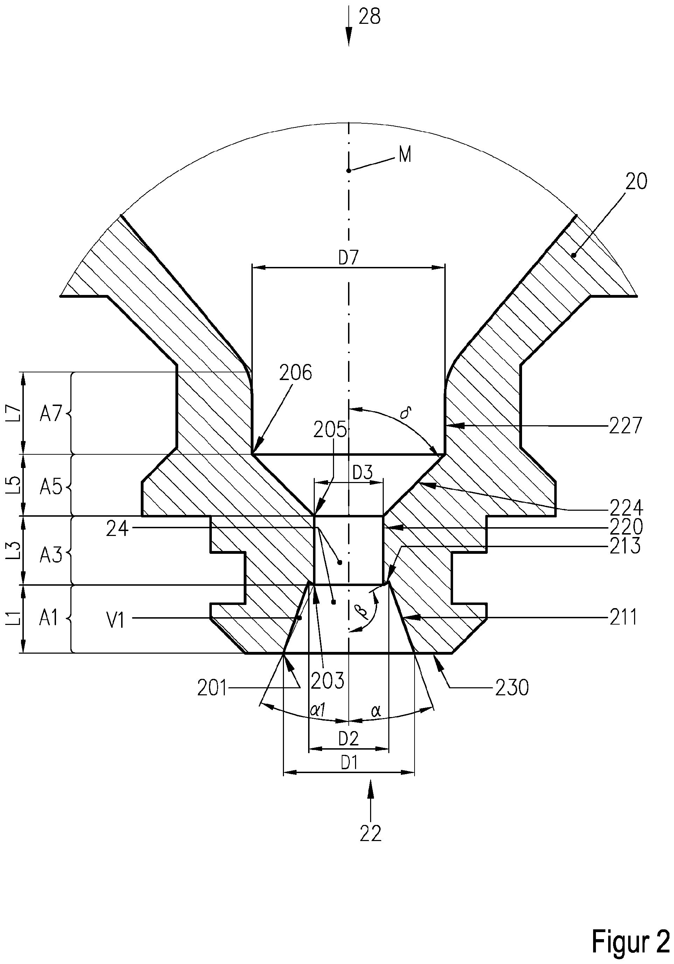

Figur 2 zeigt die Detailansicht eines weiteren Ausführungsbeispiels einer Düse 2 ähnlich der Figur 1. Sie unterscheidet sich von der in Figur 1 dadurch, dass der Vorsprung in Richtung der Längsachse M, der zwischen seiner Innenfläche 213 und der Längsachse M einen Winkel $\beta = 100°$ bildet.

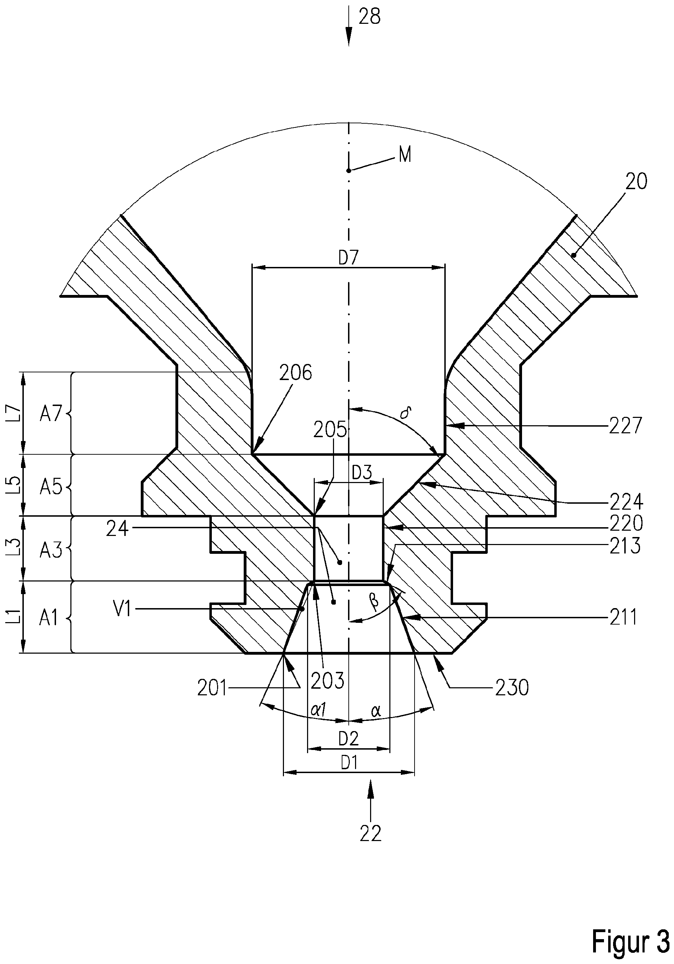

Figur 3 zeigt die Detailansicht eines weiteren Ausführungsbeispiels einer Düse 2 ähnlich der Figur 1. Sie unterscheidet sich von der in Figur 1 dadurch, dass der Vorsprung in Richtung der Längsachse M, der zwischen seiner Innenfläche 213 und der Längsachse M einen Winkel $\beta = 60°$ bildet.

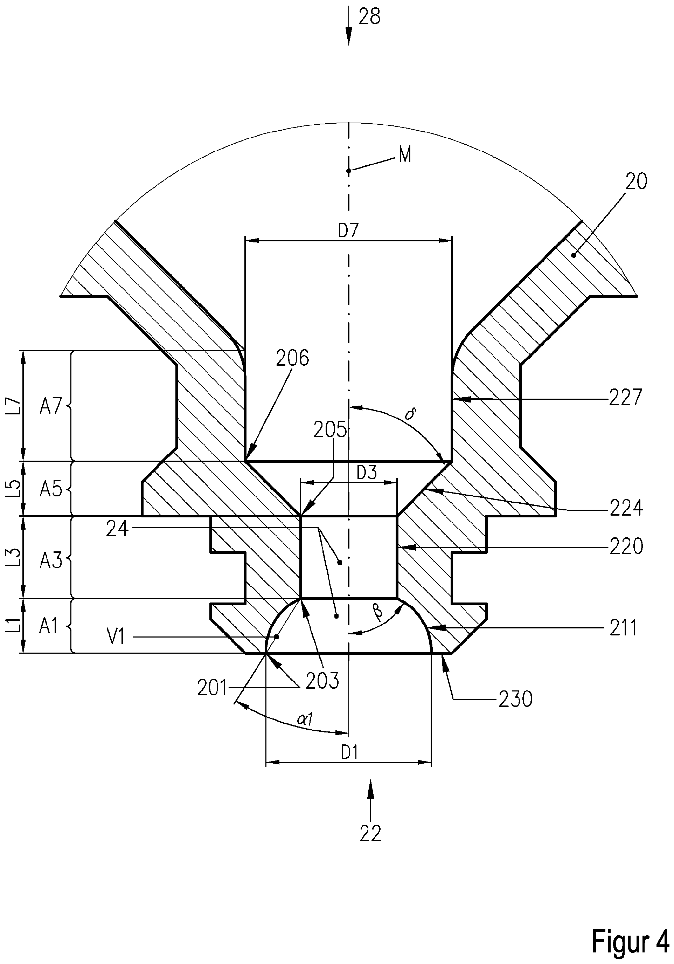

Figur 4 zeigt die Detailansicht eines weiteren Ausführungsbeispiels einer Düse 2 ähnlich der Figur 1. Sie unterscheidet sich von der in Figur 1 dadurch, dass der erste Abschnitt A1 vom vorderen Ende her eine sich konkav verjüngende Innenfläche 211 aufweist. Die virtuelle Verbindungslinie V1, die sich zwischen der Körperkante 201 der Düsenöffnung 24 mit dem Durchmesser D1 am vorderen Ende 22 und der Körperkante 203 am Übergang vom ersten Abschnitt A1 zum zweiten Abschnitt A3 der Düsenöffnung 24 mit dem Durchmesser D3 erstreckt, schließt mit der Längsachse M beispielhaft einen Winkel $\alpha 1$ von ca. 32° ein. Der Durchmesser D1 beträgt hier beispielhaft 2,4 mm, der Durchmesser D3 = 1,4 mm, damit beträgt der Durchmesser D1 das ca. 1,7-fache des Durchmessers D3.

Die durch den Durchmesser D1 des ersten Abschnitts A1 unmittelbar am vorderen Ende 22 der Düsenöffnung 24 senkrecht zur Längsachse M gebildete Fläche A10, die in Figur 12 dargestellt ist, beträgt ca. 4,5 mm$^2$, ermittelt nach

$$[A10 = 3{,}141/4 * D1^2].$$

Die durch den kleinsten Durchmessers D3 des zweiten Abschnitts A3 der Düsenöffnung 24 senkrecht zur Längsachse M gebildete Fläche A30, die in Figur 13 dargestellt ist, beträgt ca. 1,5 mm$^2$, ermittelt nach

$$[A30 = 3{,}141/4 * D3^2].$$

Die Fläche A10 beträgt damit das ca. 2,9-fache der Fläche A30.

Die Länge L1 beträgt beispielhaft 0,8 mm, die Länge L3 beispielhaft 1,2 mm, damit beträgt die Länge L1 das 0,67-fache der Länge L3.

Der Quotient der Länge L3 = 1,2 mm und des Durchmessers D3 = 1,4 mm des zweiten Abschnitts A3 beträgt 0,86. Weiterhin ist der Durchmesser D1 = 2,4 mm kleiner als der Durchmesser D7 = 3,0 mm.

Das durch die Innenfläche 211 gebildete Volumen V10 der Düsenöffnung 24 des ersten Abschnitts A1 beträgt ca. 2,3 mm$^3$. Das durch die Innenfläche 220 gebildete Volumen V30 der Düsenöffnung 24 des zweiten Abschnitts A3 beträgt ca. 1,8 mm$^3$. Damit ist Volumen V10 ca. 1,3-mal größer als Volumen V30.

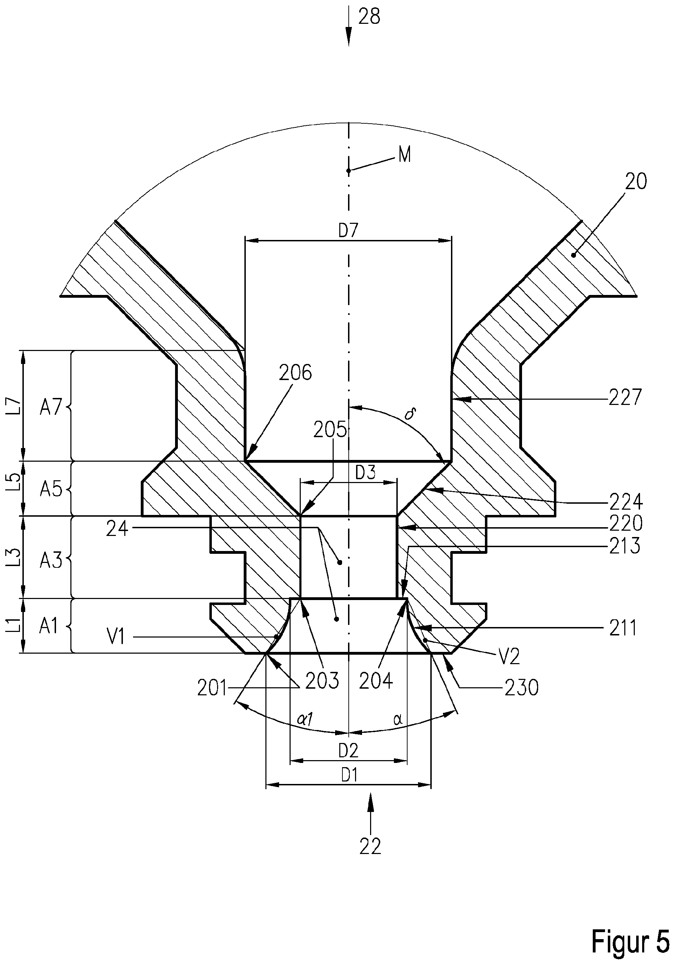

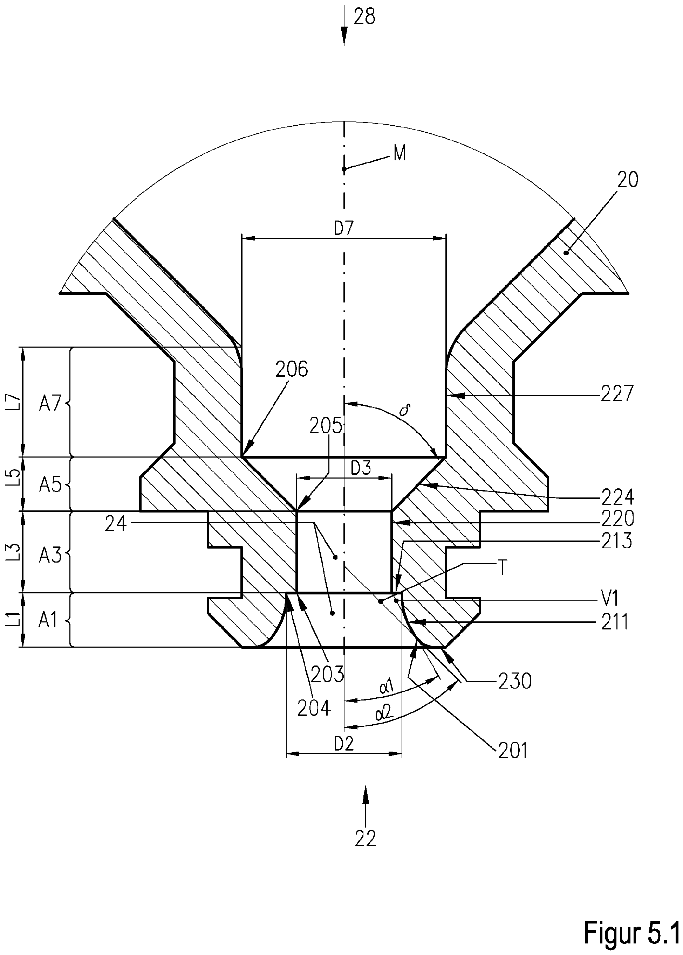

Figur 5 zeigt die Detailansicht eines weiteren Ausführungsbeispiels einer Düse 2 ähnlich der Figur 4. Sie unterscheidet sich von der in Figur 1 dadurch, dass der erste Abschnitt A1 vom vorderen Ende her eine sich konvex verjüngende Innenfläche 211 aufweist. Die virtuelle Verbindungslinie V1, die sich zwischen der Körperkante 201 der Düsenöffnung 24 mit dem Durchmesser D1 am vorderen Ende 22 und der Körperkante 203 am Übergang vom ersten Abschnitt A1 zum zweiten Abschnitt A3 der Düsenöffnung 24 mit dem Durchmesser D3 erstreckt, schließt mit der Längsachse M beispielhaft einen Winkel $\alpha 1$ von ca. 32° ein. Der Durchmesser D1 beträgt hier beispielhaft 2,4 mm, der Durchmesser D3 1,4 mm, damit beträgt der Durchmesser D1 ca. das 1,7-fache des Durchmessers D3. Die Länge L1 beträgt beispielhaft 0,8 mm, die Länge L3 beispielhaft 1,2 mm, damit beträgt die Länge L1 ca. das 0,67-fache der Länge L3.

Der Quotient der Länge L3 = 1,2 mm und des Durchmessers D3 = 1,4 mm des zweiten Abschnitts A3 beträgt ca. 0,86. Weiterhin ist der Durchmesser D1 = 2,4 mm kleiner als der Durchmesser D7 = 3,0 mm.

Für die Flächen A10 und A30 gelten die beispielhaften Angaben aus Figur 4, gleiches gilt für die Angaben der Volumina V10 und V30.

Wenn die Körperkante 201 nicht als solche eindeutig erkennbar ist, weil beispielsweise die konvexe Innenfläche 211 kontinuierlich oder "fließend" in die Fläche 230 übergeht, dann ist der Bereich der Innenfläche(n) mit Körperkante gemeint, wenn vom hinteren Ende 28 der Düse 2 her gesehen zwischen einer an die Innenfläche 211 angelegten Tangente T und der Längsachse M ein Winkel $\alpha 2$ von 65° überschritten wird. Die virtuelle Verbindungslinie V1 erstreckt sich dann zwischen diesem Bereich und Körperkante 203. Dies ist in Figur 5.1 gezeigt.

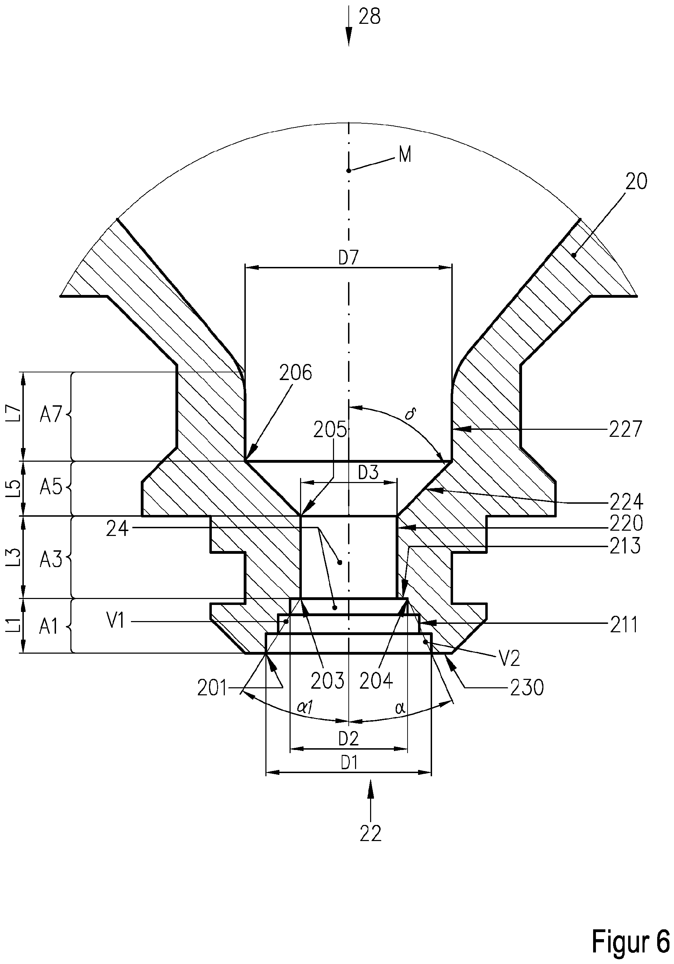

Figur 6 zeigt ein weiteres Ausführungsbeispiel einer Düse 2 ähnlich der Figur 4. Sie unterscheidet sich von der in Figur 4 dadurch, dass der erste Abschnitt A1 vom vorderen Ende her eine sich stufig verjüngende Innenfläche 211 aufweist. Die virtuelle Verbindungslinie V1, die sich zwischen der Körperkante 201 der Düsenöffnung 24 mit dem Durchmesser D1 am vorderen Ende 22 und der Körperkante 203 am Übergang vom ersten Abschnitt A1 zum zweiten Abschnitt A3 der Düsenöffnung 24 mit dem Durchmesser $D_3$ erstreckt, schließt mit der Längsachse M beispielhaft einen Winkel $\alpha$1 von ca. 32° ein. Der Durchmesser D1 beträgt hier beispielhaft 2,4 mm, der Durchmesser D3 = 1,4 mm, damit beträgt der Durchmesser D1 das 1,7-fache des Durchmessers D3. Die Länge L1 = 0,8 mm des ersten Abschnitts A1 und die Länge L3 = 1,2 mm A3 des zweiten Abschnitts ergeben ein Verhältnis von L1/L3 = 0,67. Der Quotient der Länge L3 und des Durchmessers D3 des zweiten Abschnitts A3 beträgt ca. 0,86. Der Durchmesser D7 beträgt beispielhaft 3,0 mm. Damit ist der Durchmesser D1 = 2,4 mm kleiner als der Durchmesser D7 = 3,0 mm.

Für die Flächen A10 und A30 gelten die beispielhaften Angaben aus Figur 4, gleiches gilt für die Angaben der Volumina V10 und V30.

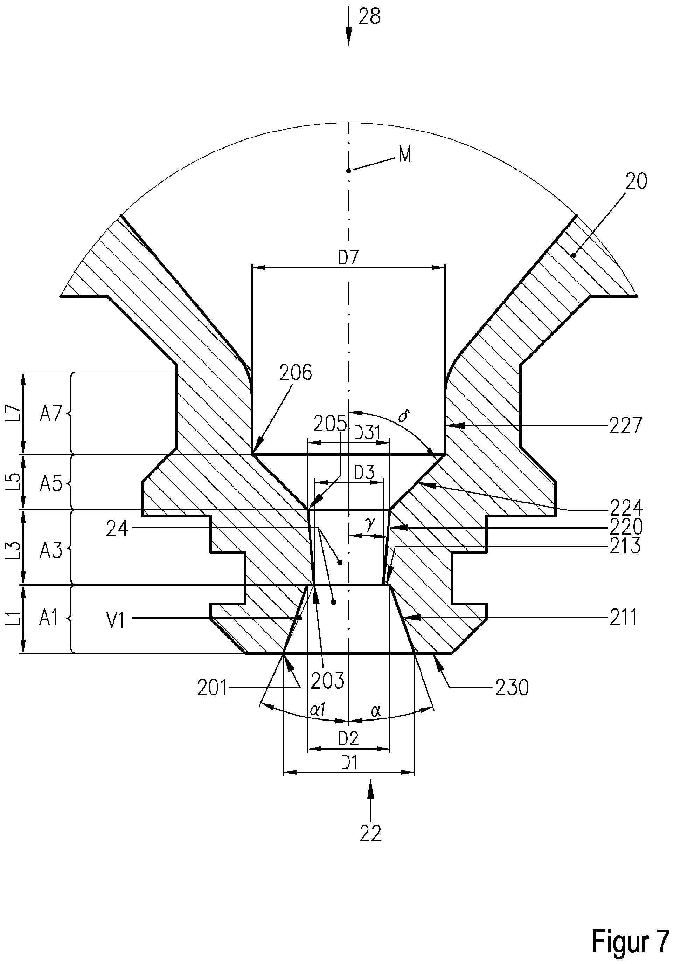

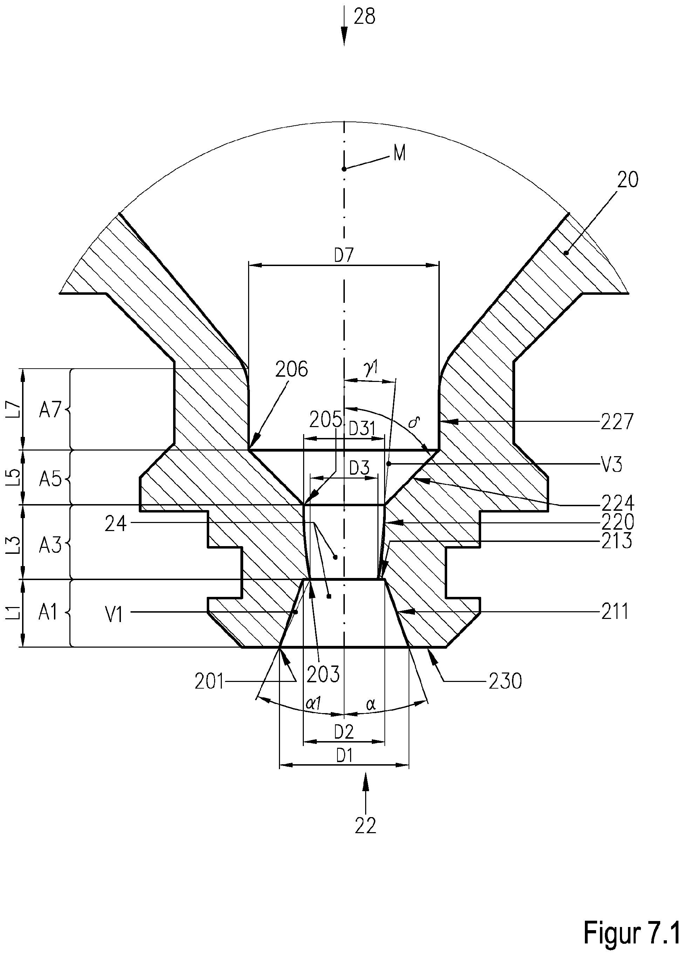

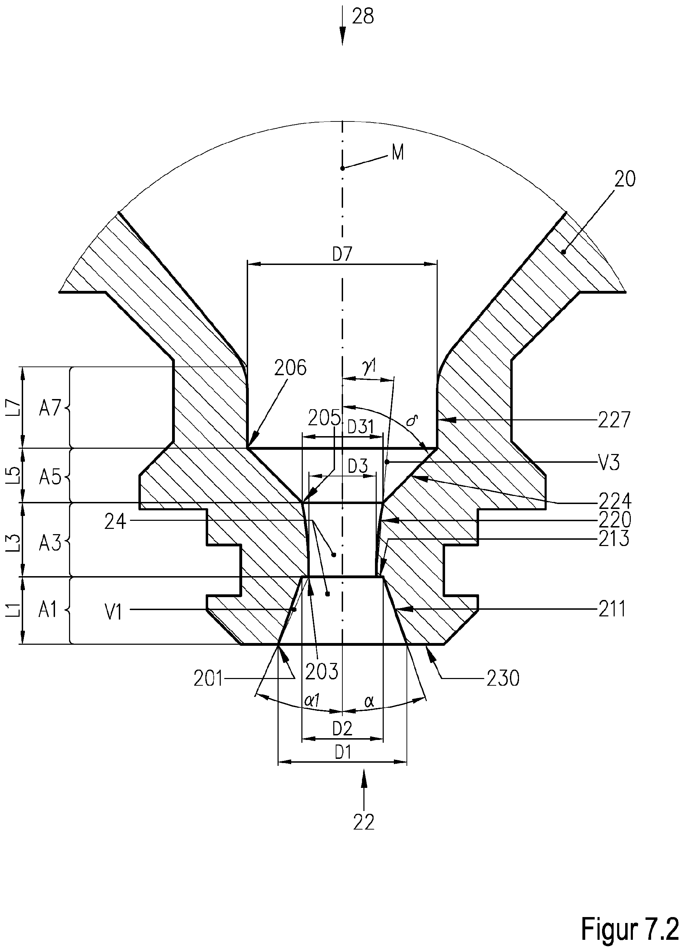

Figur 7 zeigt die Detailansicht eines weiteren Ausführungsbeispiels einer Düse 2 ähnlich der Figur 1. Die Maße sind mit denen aus Figur 1 identisch. Lediglich der zweite Abschnitt A3 ist so gestaltet, dass sich vom vorderen Ende 22 der Düse 2 her gesehen seine Innenfläche 220 in einem Winkel $\gamma$ zur Längsachse M von beispielhaft 5° erweitert. Die Erweiterung erfolgt hier konisch. Damit ist der Durchmesser D31 des Abschnitts A3 am Übergang zum Abschnitt A5 größer als der Durchmesser D3 am Übergang vom ersten Abschnitt A1 zum zweiten Abschnitt A3 der Düsenöffnung 24.

Figur 7.1 zeigt die Detailansicht eines weiteren Ausführungsbeispiels einer Düse 2 ähnlich der Figur 7. Die Maße sind mit denen aus Figur 7 identisch. Lediglich der zweite Abschnitt A3 ist so gestaltet, dass sich vom vorderen Ende 22 der Düse 2 her gesehen seine Innenfläche 220 konkav erweitert. Die virtuelle Verbindungslinie V3, die sich zwischen der Körperkante 203 am Übergang vom ersten Abschnitt A1 zum zweiten Abschnitt A3 und der Körperkante 205 am Übergang vom zweiten Abschnitt A3 zum dritten Abschnitt A5 erstreckt, schließt mit der Längsachse M beispielhaft einen Winkel $\gamma$1 von ca. 5° ein. Damit ist in diesem Beispiel der Durchmesser D31 des Abschnitts A3 am Übergang zum Abschnitt A5 größer als der Durchmesser D3 am Übergang vom ersten Abschnitt A1 zum zweiten Abschnitt A3 der Düsenöffnung 24.

Figur 7.2 zeigt die Detailansicht eines weiteren Ausführungsbeispiels einer Düse 2 ähnlich der Figur 7.1. Die Maße sind mit denen aus Figur 7.1 identisch. Lediglich der zweite Abschnitt A3 ist so gestaltet, dass sich vom vorderen Ende 22 der Düse 2 her gesehen seine Innenfläche 220 nicht konkav, sondern konvex erweitert.

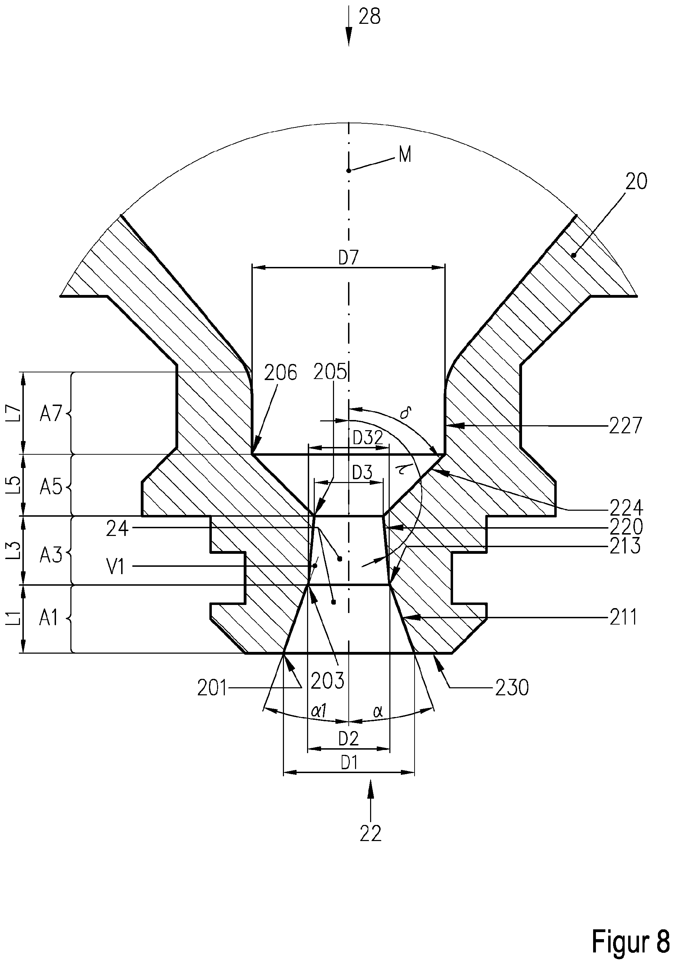

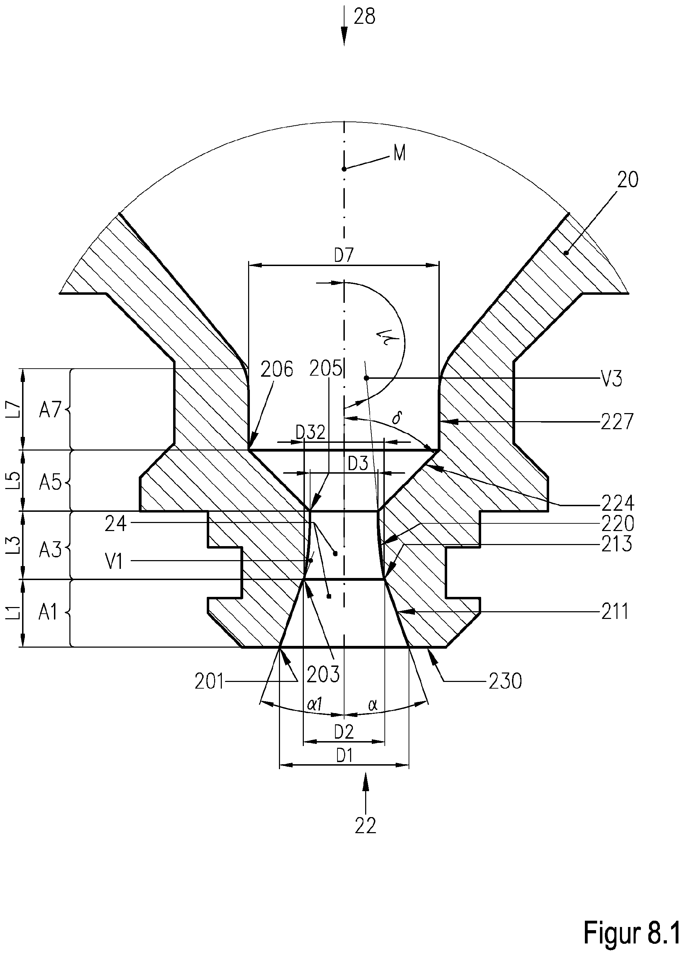

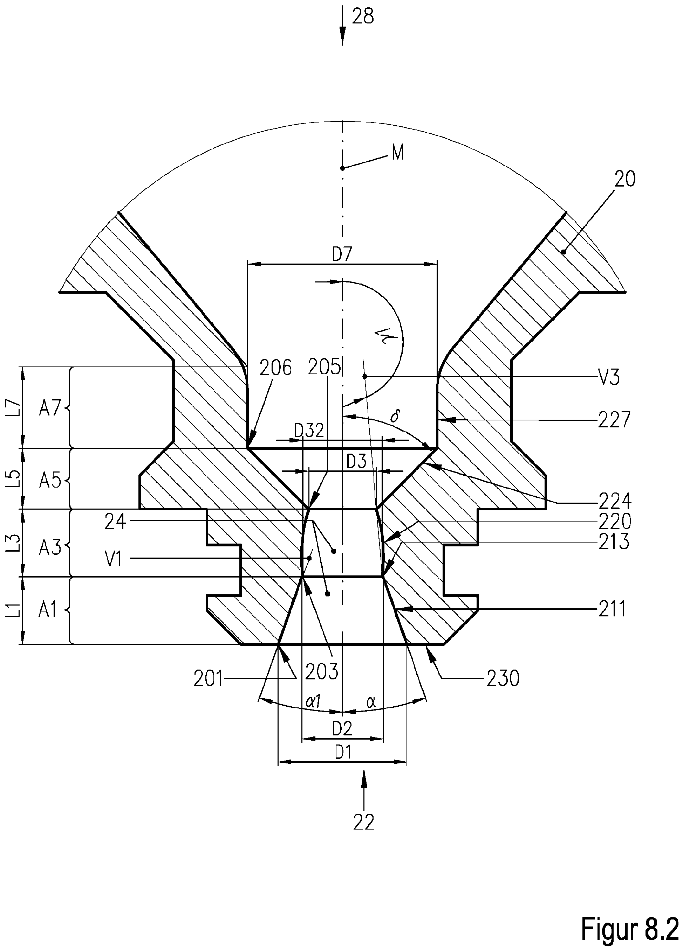

Figur 8 zeigt die Detailansicht eines weiteren Ausführungsbeispiels einer Düse 2 ähnlich der Figur 1. Der zweite Abschnitt A3 ist so gestaltet, dass sich vom vorderen Ende 22 der Düse 2 her gesehen seine Innenfläche 220 in einem Winkel $\gamma$ zur Längsachse M von beispielhaft 175° verjüngt. Die Verjüngung erfolgt hier konisch.

Damit ist der Durchmesser D32 = 1,17 mm des zweiten Abschnitts A3 am Übergang vom ersten Abschnitt A1 zu zweiten Abschnitt A3 größer als der Durchmesser D3 = 1 mm am Übergang vom zweiten Abschnitt A3 zum dritten Abschnitt A der Düsenöffnung 24. Der Durchmesser D2 beträgt 1,4 mm und der Durchmesser D1 = 2,1 mm. Der Winkel $\alpha$ beträgt 19° und der Winkel $\alpha$1 beträgt 21°.

Figur 8.1 zeigt die Detailansicht eines weiteren Ausführungsbeispiels einer Düse 2 ähnlich der Figur 8. Der zweite Abschnitt A3 ist jedoch so gestaltet, dass sich vom vorderen Ende 22 der Düse 2 her gesehen seine Innenfläche 220 konvex verjüngt. Die virtuelle Verbindungslinie V3, die sich zwischen der Körperkante 203 am Übergang vom ersten Abschnitt A1 zum zweiten Abschnitt A3 und der Körperkante 205 am Übergang vom zweiten Abschnitt A3 zum dritten Abschnitt A5 erstreckt, schließt mit der Längsachse M beispielhaft einen Winkel $\gamma$1 von ca. 175° ein. Damit ist der Durchmesser D32 = 1,17 mm des zweiten Abschnitts A3 am Übergang vom ersten Abschnitt A1 zum zweiten Abschnitt A3 größer als der Durchmesser D3 = 1 mm am Übergang vom zweiten Abschnitt A3 zum dritten Abschnitt A der Düsenöffnung 24. Der Durchmesser $D_2$ beträgt 1,4 mm und der Durchmesser D1 = 2,1 mm. Der Winkel $\alpha$ beträgt in diesem Beispiel 19° und der Winkel $\alpha$1 beträgt in diesem Beispiel 21°.

Figur 8.2 zeigt die Detailansicht eines weiteren Ausführungsbeispiels einer Düse 2 ähnlich der Figur 8.1. Der zweite Abschnitt A3 ist jedoch so gestaltet, dass sich vom vorderen Ende 22 der Düse 2 her gesehen seine Innenfläche 220 nicht konvex, sondern konkav verjüngt.

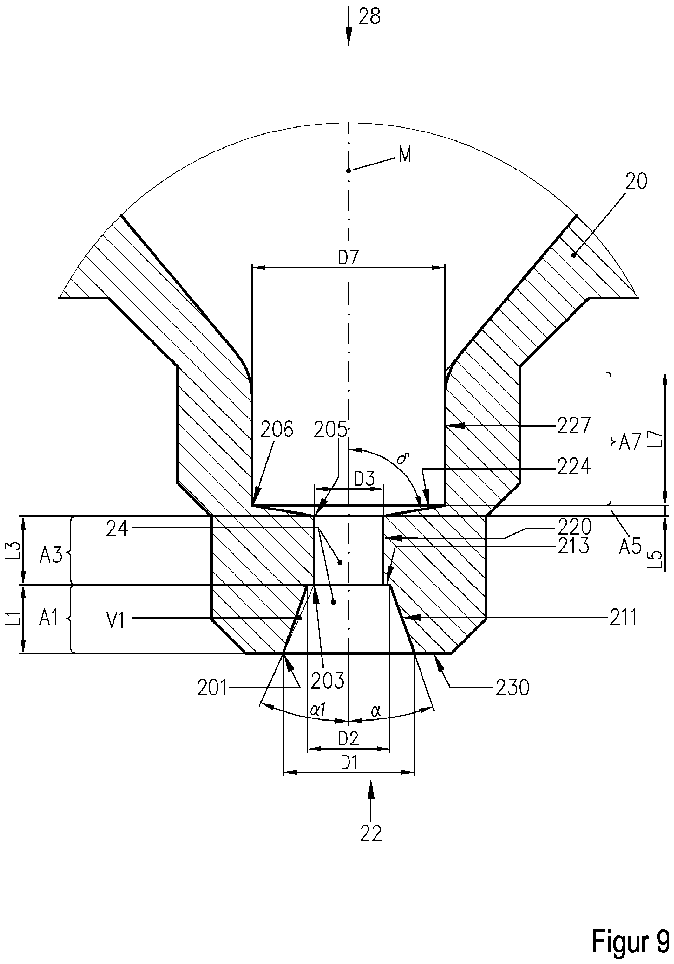

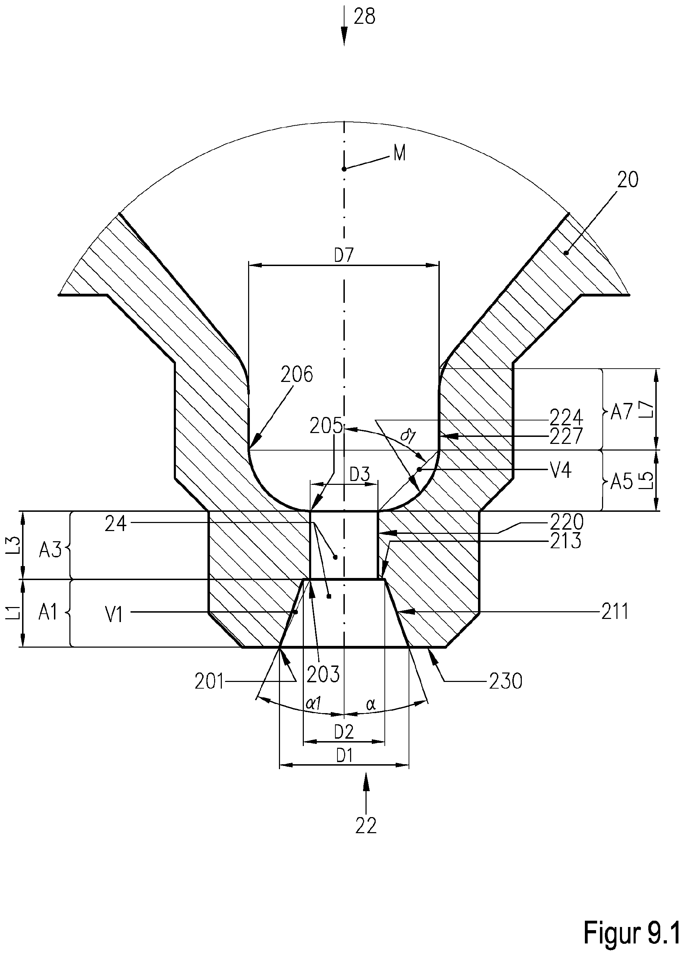

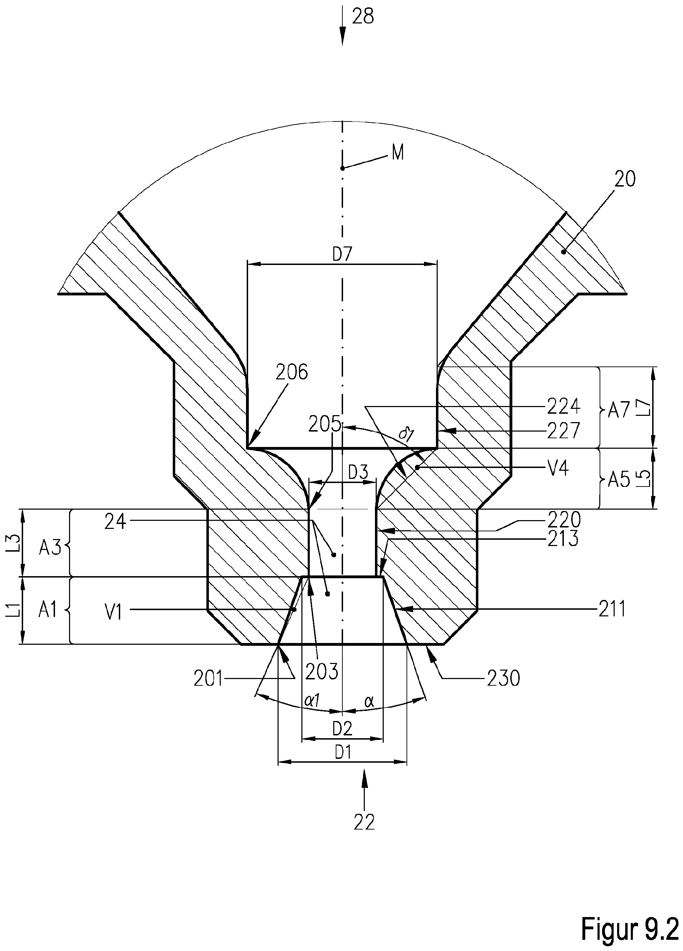

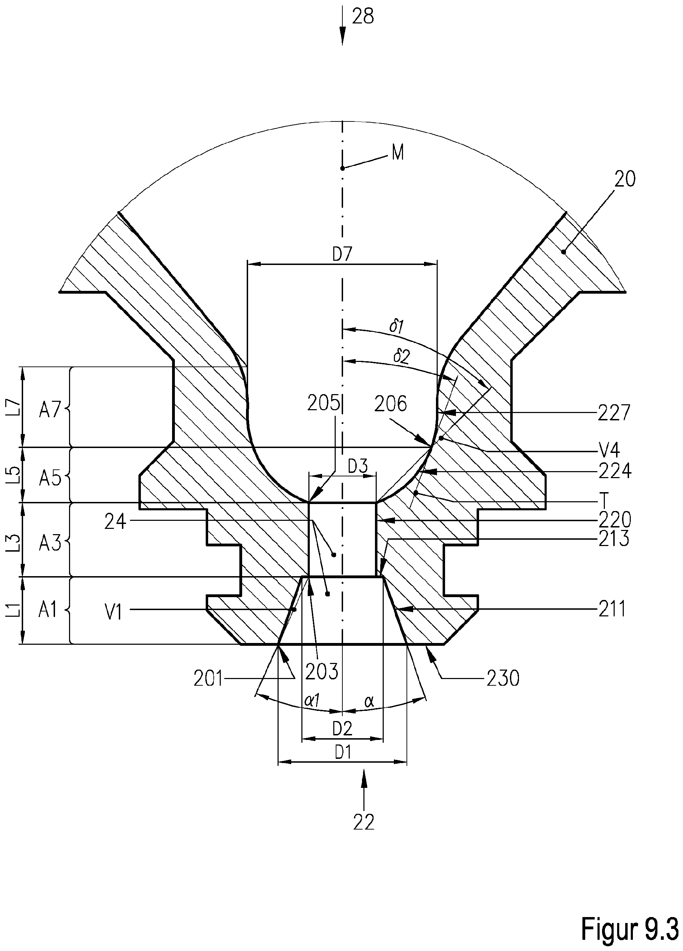

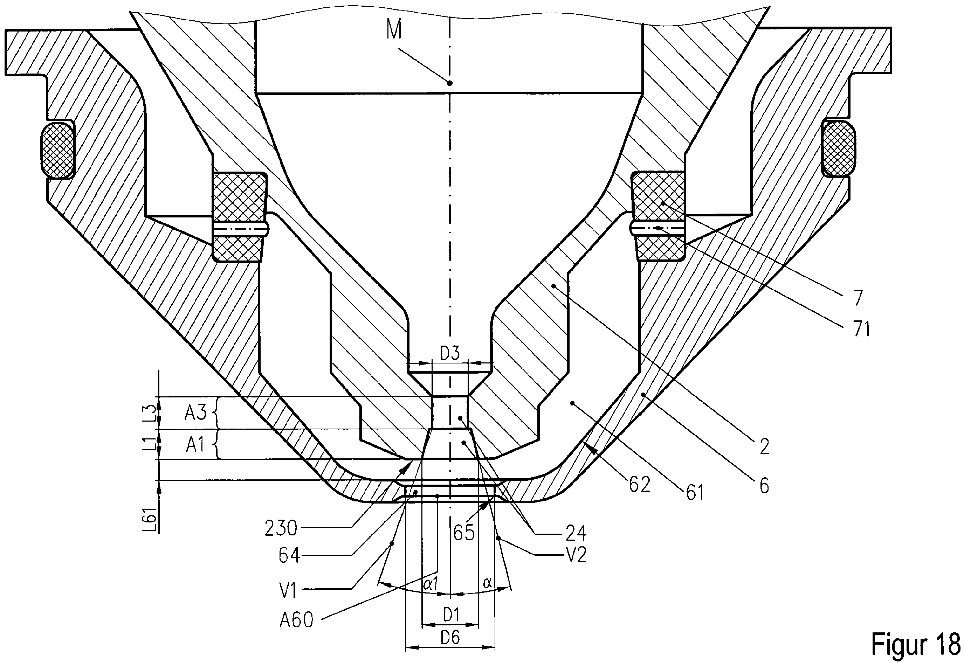

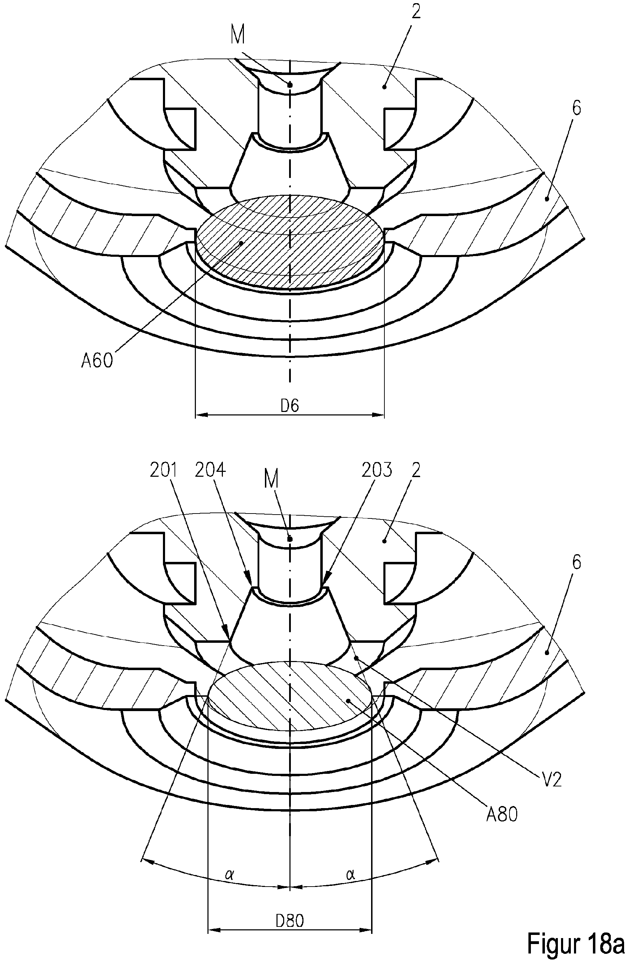

Figur 9 zeigt die Detailansicht eines weiteren Ausführungsbeispiels einer Düse 2 ähnlich der Figur 1. Die Maße sind mit denen aus Figur 1 identisch. Der dritte Abschnitt A5 weist zwischen seiner inneren Oberfläche 224 und der Längsachse M beispielhaft einen Winkel $\delta$ von 80° auf und erweitert sich. Allerdings handelt es sich um eine Düse, deren Außenkontur sich von den anderen Ausführungsbeispielen unterscheidet. Diese ist beispielsweise für den Einsatz in Plasmabrennern, Laserköpfen oder Plasma-Laser-Köpfen ohne Flüssigkeitskühlung für die Düse geeignet. In diesem Beispiel hat sie keine Nut 238 zur Aufnahme eines Rundrings. Eine entsprechende Anordnung ist in Figur 18 gezeigt.

Figur 9.1 zeigt die Detailansicht eines weiteren Ausführungsbeispiels einer Düse 2 ähnlich der Figur 9. Die Maße sind mit denen aus Figur 9 identisch. Lediglich der dritte Abschnitt A5 ist so gestaltet, dass sich vom vorderen Ende 22 der Düse 2 her gesehen seine Innenfläche 224 konkav erweitert. Die virtuelle Verbindungslinie V4, die sich zwischen der Körperkante 205 (, die in diesem Fall auch als "Innenecke" oder "Körperinnenkante" bezeichnet werden kann,) am Übergang vom zweiten Abschnitt A3 zum dritten Abschnitt A5 und der Körperkante 206 (, die in diesem Fall auch als "Innenecke" oder "Körperinnenkante" bezeichnet werden kann,) am Übergang vom dritten Abschnitt A5 zum vierten Abschnitt A7 erstreckt, schließt mit der Längsachse M beispielhaft einen Winkel $\gamma 1$ von ca. 45° ein.

Wenn die Körperkante 206 nicht als solche eindeutig erkennbar ist, weil beispielsweise die konkave Innenfläche kontinuierlich oder "fließend" in die Innenfläche 227 übergeht, dann ist der Bereich 206 der Innenfläche(n) gemeint, wenn vom vorderen Ende 22 der Düse her gesehen zwischen einer an die Innenfläche 224 angelegte Tangente T und der Längsachse M ein Winkel $\delta 2$ von 20° unterschritten wird. Dies ist in Figur 9.3 gezeigt.

Figur 9.2 zeigt die Detailansicht eines weiteren Ausführungsbeispiels einer Düse 2 ähnlich der Figur 9. Die Maße sind mit denen aus Figur 9 identisch. Lediglich der dritte Abschnitt A5 ist so gestaltet, dass sich vom vorderen Ende 22 der Düse 2 her gesehen seine Innenfläche 224 konvex erweitert. Die virtuelle Verbindungslinie V4, die sich zwischen der Körperkante 205 am Übergang vom zweiten Abschnitt A3 zum dritten Abschnitt A5 und der Körperkante 206 am Übergang vom dritten Abschnitt A5 zum vierten Abschnitt A7 erstreckt, schließt mit der Längsachse M beispielhaft einen Winkel $\gamma l$ von ca. 45° ein.

Wenn die Körperkante 206 nicht als solche eindeutig erkennbar ist, weil beispielsweise die konkave Innenfläche 224 kontinuierlich oder "fließend" in die Fläche 227 übergeht, dann ist der Bereich der Innenfläche(n) mit Körperkante 206 gemeint, wenn vom vorderen Ende 22 der Düse 2 her gesehen zwischen einer an die Innenfläche 224 angelegten Tangente T und der Längsachse M ein Winkel $\delta 2$ von 20° unterschritten wird. Die virtuelle Verbindungslinie V4 erstreckt sich dann zwischen diesem Bereich 206 und Körperkante 205. Dies ist in Figur 9.3 gezeigt, die einen sich konkav erweiternden dritten Abschnitt A5 zeigt.

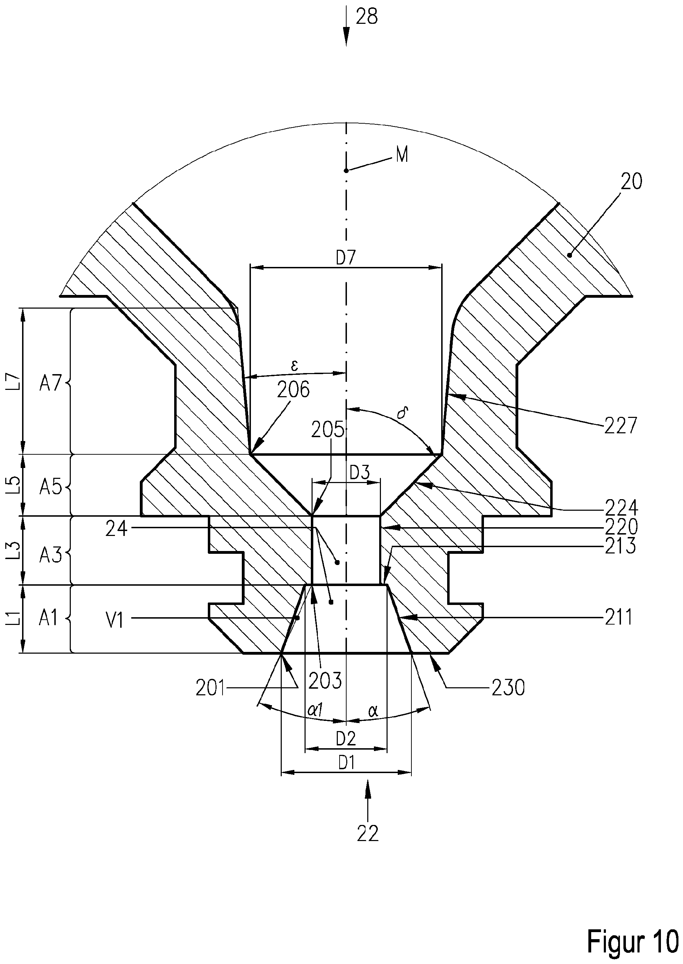

Figur 10 zeigt die Detailansicht eines weiteren Ausführungsbeispiels einer Düse 2 ähnlich der Figur 1. Die Maße sind mit denen aus Figur 1 identisch. Der vierte Abschnitt A7 weist zwischen seiner inneren Oberfläche 227 und der Längsachse M beispielhaft einen Winkel $\epsilon$ von 5° auf und erweitert sich.

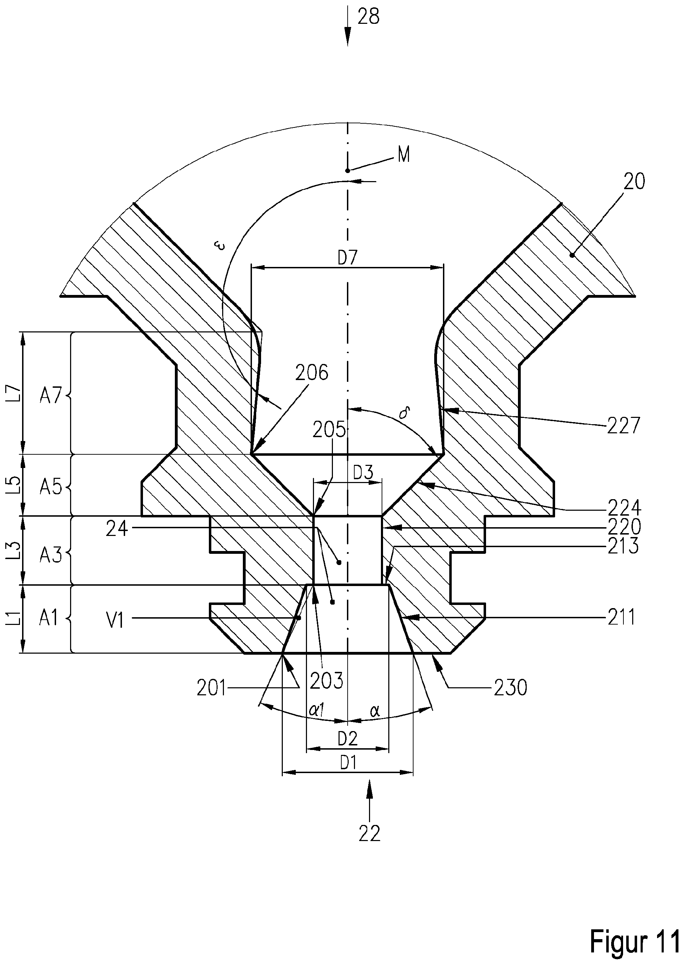

Figur 11 zeigt die Detailansicht eines weiteren Ausführungsbeispiels einer Düse 2 ähnlich der Figur 1. Die Maße sind mit denen aus Figur 1 identisch. Der vierte Abschnitt A7 weist zwischen seiner inneren Oberfläche 227 und der Längsachse M beispielhaft einen Winkel $\epsilon$ von 175° auf und verjüngt sich.

Zwischen den jeweiligen Abschnitten A1, A3, A4, A5 und A7 können an den Übergängen Radien angeordnet sein, beispielsweise in der Größe von 0,1 mm.

Figur 12, Figur 13 und Figur 13a zeigen die durch die Durchmesser D1, D2 und D3 senkrecht zur Längsachse M gebildeten Flächen A10, A20, A30 und A31 der Düsenöffnung 24. In den Ausführungsbeispielen der Figuren 1 bis 11 ist die Fläche A10 mindestens 1,7-mal größer, vorteilhafterweise mindestens 2,1-mal größer, als die Fläche A30. Weiterhin ist sie maximal 4 größer, vorteilhafterweise maximal 3,7-mal größer, als die Fläche A30.

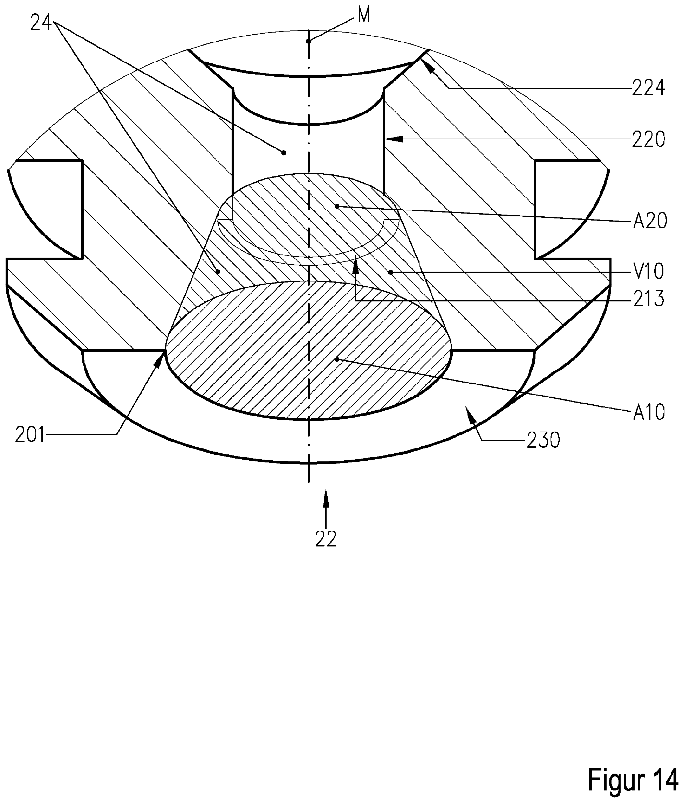

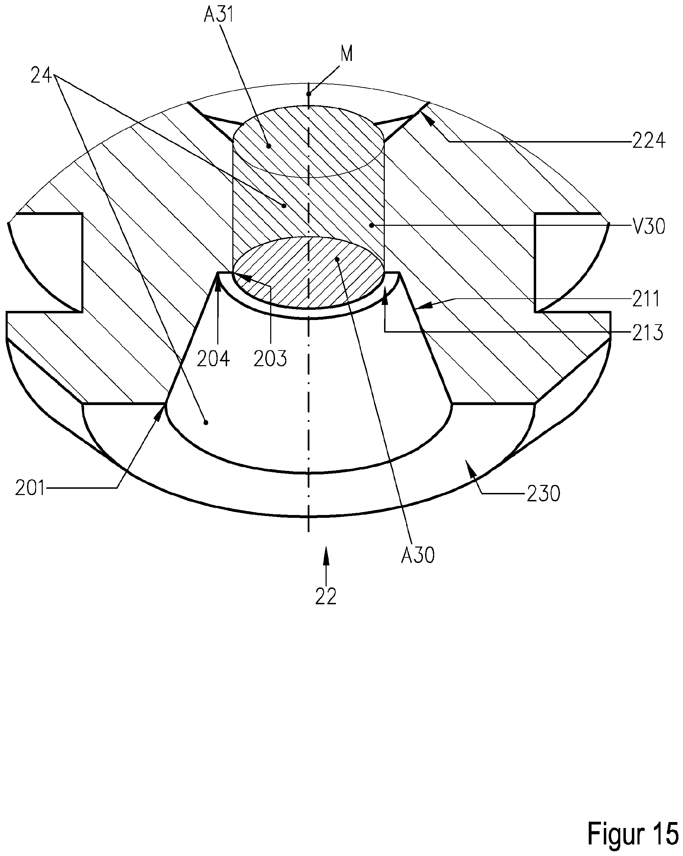

Figur 14 zeigt das durch die Innenflächen 211 und 213 eingeschlossene Volumen V10 der Düsenöffnung 24 des ersten Abschnitts A1 und Figur 15 das durch die Innenfläche 220 eingeschlossene Volumen V30 der Düsenöffnung 24 des zweiten Abschnitts A3. In den Ausführungsbeispielen ist das Volumen V10 größer, vorteilhafterweise mindestens 1,3 mal größer, und/oder maximal 2,5 mal größer, vorteilhafterweise maximal 2,2 mal größer, als das Volumen V30.

Figur 16 zeigt das Schnittbild eines Plasmabrennerkopfes 1, der Bestandteil eines Plasmabrenners sein kann.

Der Plasmabrennerkopf 1 weist einen Brennerkörper 8, eine Elektrode 3, eine erfindungsgemäße Düse 2, eine Düsenkappe 5, eine Düsenhalterung 81, die die Düse 2 aufnimmt, und eine Düsenschutzkappe 6 auf, die die Düse 2 in der Düsenhalterung 81 fixiert.

In dieser Figur ist beispielhaft die Düse 2 aus Figur 1 eingesetzt.

Das vordere Ende 33 der Elektrode 3 ragt in den Innenraum der Düse 2 hinein. Weiterhin befindet sich zwischen der Elektrode 3 und der Düse 2 eine Gasführung 4 für das Plasmagas oder Prozessgas PG. Die Gasführung 4 hat Öffnungen 41, die das Plasmagas oder Prozessgas durchleiten und hier beispielhaft radial in den Innenraum zwischen Elektrode 3 und Düse 2 führen. Durch einen Versatz zur Radialen kann das Plasmagas oder Prozessgas PG in Rotation versetzt werden. Die Gasführung 4 isoliert die Elektrode 3 und Düse 2 elektrisch voreinander. Die Elektrode 3 kann im Inneren flüssigkeitsgekühlt sein, dies ist hier nicht dargestellt. Das Kühlmedium (WV- Vorlauf, WR - Rücklauf) strömt im Raum 51 zwischen der Düse 2 und der Düsenkappe 5 und kühlt diese.

Das vordere Ende der Düse 22 wird von der Düsenschutzkappe 6 zumindest teilweise abgedeckt. Die Düsenschutzkappe 6 hat eine Öffnung 64, die mit der Düsenöffnung 24 auf der Längsachse M in Flucht liegt. Zwischen der Düsenkappe 5, dem vorderen Ende 22 der Düse 2 und der Düsenschutzkappe 6 befindet sich eine Gasführung 7 für das Sekundärgas SG. Die Gasführung 7 hat Öffnungen 71, die das Sekundärgas SG durchleiten und hier beispielhaft radial in den Innenraum 61 zwischen Düsenkappe 5, dem vorderen Ende 22 der Düse 2 und der Düsenschutzkappe 6 führen. Durch einen Versatz zur Radialen kann das Plasmagas oder Prozessgas PG in Rotation versetzt werden. Die Gasführung 7 isoliert die Düsenkappe 5 und die Düsenschutzkappe 6 elektrisch voreinander.

Das Plasmagas oder Prozessgas PG wird beim Plasmaschneiden durch einen Lichtbogen ionisiert und strömt letztlich aus der Düsenöffnung 24 und der Öffnung der Düsenschutzkappe 64.

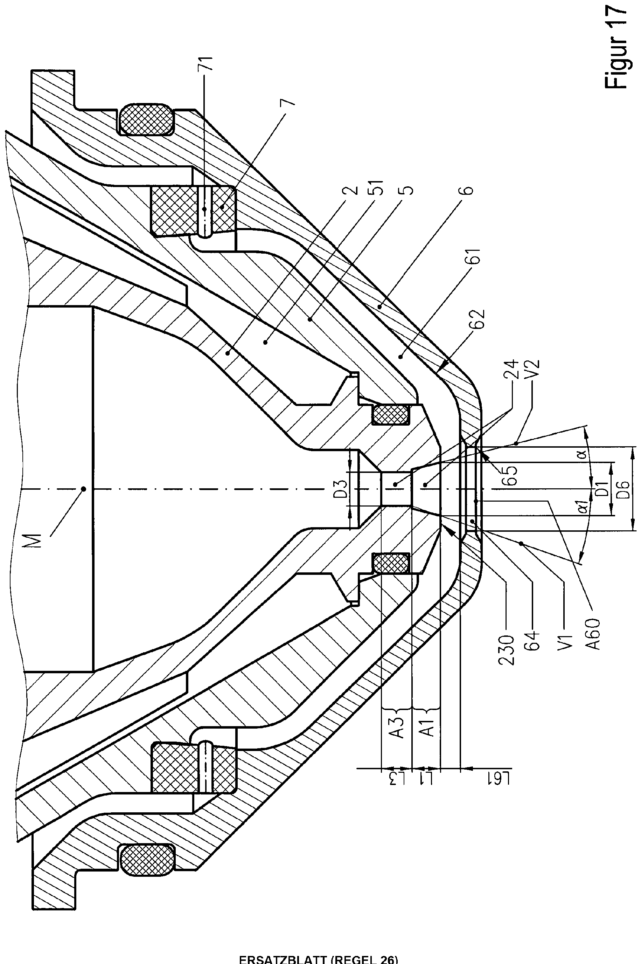

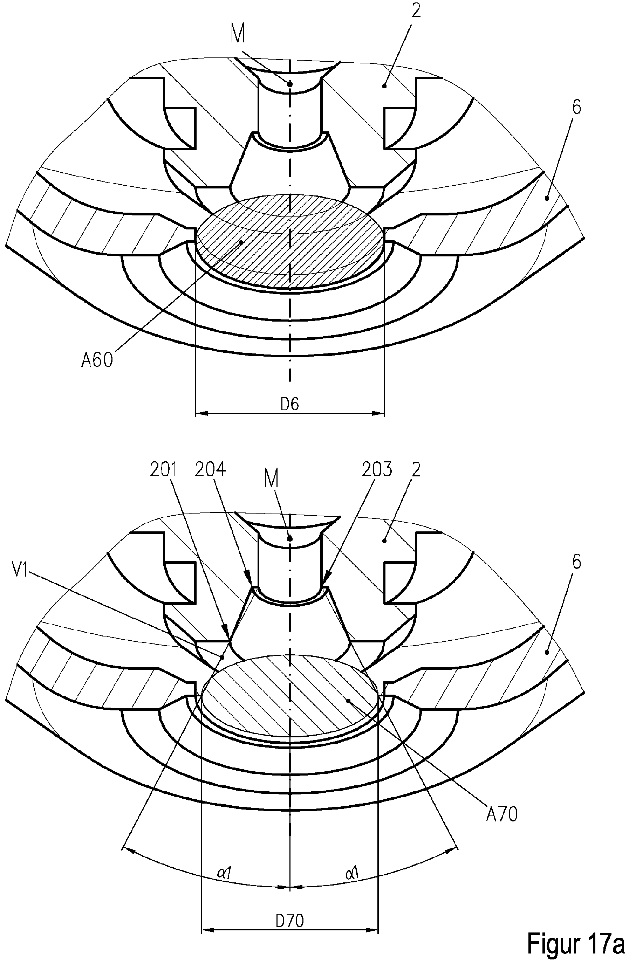

In Figur 17 und Figur 17a ist jeweils eine geschnittene Detailansicht einer Anordnung, die Bestandteil des Plasmabrennerkopfes aus Figur 16 ist, gezeigt. Diese Anordnung kann aber ebenso Bestandteil eines Laserschneidkopfes oder eine Plasma-Laser-Schneidkopfes sein. Die Anordnung umfasst die Düse 2 und die Düsenschutzkappe 6. Ferner sind die Düsenkappe 5 und die Gasführung 7 gezeigt.

Das vordere Ende der Düse 2 wird von der Düsenschutzkappe 6 zumindest teilweise abgedeckt. Die Düsenschutzkappe 6 hat eine Öffnung 64, die mit der Düsenöffnung 24 auf der Längsachse M in Flucht liegt. Zwischen der Düsenkappe 5, dem vorderen Ende 22 der Düse 2 und der Düsenschutzkappe 6 befindet sich eine Gasführung 7 für Sekundärgas SG. Die Gasführung 7 hat Öffnungen 71, die das Sekundärgas SG durchleiten und hier beispielhaft radial in den Innenraum 61 zwischen Düsenkappe 5, dem vorderen Ende 22 der Düse 2 und der Düsenschutzkappe 6 führen. Durch einen Versatz zur Radialen kann das Plasmagas oder Prozessgas PG in Rotation versetzt werden. Die Gasführung 7 isoliert die Düsenkappe 5 und die Düsenschutzkappe 6 elektrisch voreinander.

Die Düse 2 hat beispielsweise gemäß Figur 1 einen Durchmesser D1 = 1,9 mm und D3 = 1,0 mm. Die Düsenschutzkappe 6 hat eine Öffnung 64 mit einem kleinsten Durchmesser D6 von 3,0 mm. Der Durchmesser D6 ist größer als die Durchmesser D1 und D3. Die durch den Durchmesser D6 senkrecht zur Längsachse gebildete Fläche A60 ist größer als die durch den Durchmesser D1 gebildete Fläche A10 und die durch den Durchmesser D3 gebildete Fläche A30.

Der Winkel $\alpha$ der Düse 2 beträgt in diesem Beispiel 19° und der Winkel $\alpha$1 der Düse 2 beträgt in diesem Beispiel 24°. Verlängert man virtuell die von vorn gesehenen sich konisch verjüngende Innenflächen 211 in Richtung des vorderen Endes 22 der Düse, also aus der Düse 2 heraus, so bildet diese die virtuelle Linie V2. Diese berührt nicht die durch die Öffnung 64 mit dem Durchmesser D6 gebildete Körperkante 65 der Düsenschutzkappe 6. Gleiches gilt für die verlängerte virtuelle Verbindungslinie V1 zwischen der Körperkante 201 der Düsenöffnung 24 am vorderen Ende 22 und der Körperkante 203 am Übergang vom ersten Abschnitt A1 zum zweiten Abschnitt A3.

Die Fläche A60 und der Durchmesser D6 der Öffnung 64 der Düsenschutzkappe 6 sind größer als die durch die verlängerten virtuellen Verbindungslinien V1 und V2 projizierten virtuellen Flächen A70 und A80 oder Durchmesser der Düse 2 auf die Düsenschutzkappe 6.

Weiterhin ist die Länge L61 des kürzesten Abstandes zwischen der Außenfläche des vorderen Endes 22 der Düse 2 und der Innenfläche der Düsenschutzkappe 6 beispielhaft 0,7 mm und ist damit kleiner als die Länge L1= 1,0 mm des ersten Abschnitts A1 und die Länge L3 = 1,0 mm des zweiten Abschnitts A3 der Düse 2 und auch kleiner als die Summe L1 und L3, die 2 mm beträgt.

In Figur 18 und Figur 18a ist eine geschnittene Detailansicht einer Anordnung gezeigt. Die beanspruchte Anordnung umfassend die Düse 2 aus Figur 9 und eine Düsenschutzkappe 6. Zudem ist eine Gasführung 7 gezeigt. Diese Anordnung kann Bestandteil eines Plasmabrennerskopfes, eines Laserschneidkopfes oder eine Plasma-Laser-Schneidkopfes sein.

Im Gegensatz zu Figur 17 wird die Düse 2 nicht durch eine Düsenkappe umschlossen. Die Düse 2 hat einen Durchmesser D1 = 1,9 mm und D3 = 1,0 mm. Die Düsenschutzkappe 6 hat eine Öffnung 64 mit einen kleinsten Durchmesser D6 von 3,0 mm. Der Durchmesser D6 ist größer als der Durchmesser D1 und D3 der Düse 2. Die durch den Durchmesser D6 senkrecht zur Längsachse gebildete Fläche A60 ist größer als die durch den Durchmesser D1 gebildete Fläche A10 und die durch den Durchmesser D3 gebildete Fläche A30.

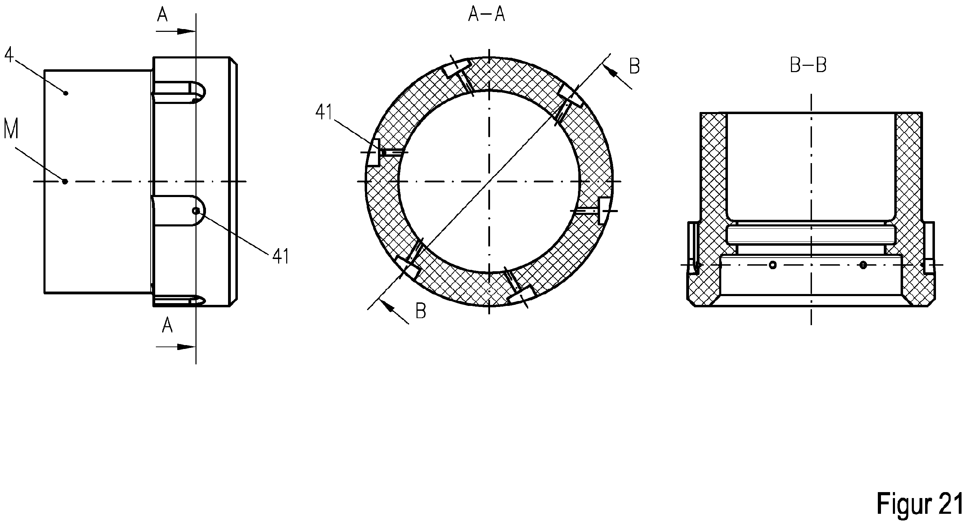

Das vordere Ende der Düse 22 wird von der Düsenschutzkappe 6 zumindest teilweise abgedeckt. Die Düsenschutzkappe 6 hat eine Öffnung 64, die mit der Düsenöffnung 24 auf der Längsachse M in Flucht liegt. Zwischen der Düse 2 und der Düsenschutzkappe 6 befindet sich eine Gasführung 7 für das Sekundärgas SG. Die Gasführung 7 hat Öffnungen 71, die das Sekundärgas SG durchleiten und hier beispielhaft radial in den Innenraum 61 zwischen der Düse 2 und der Düsenschutzkappe 6 führt. Durch einen Versatz zur Radialen kann das Plasmagas PG in Rotation versetzt werden (siehe Figur 21). Die Gasführung 7 isoliert die Düse 2 und die Düsenschutzkappe 6 elektrisch voreinander.

Der Winkel $\alpha$ der Düse 2 beträgt in diesem Beispiel 19° und der Winkel $\alpha$1 der Düse 2 beträgt in diesem Beispiel 24°. Verlängert man virtuell die von vorne gesehene sich konisch verjüngende Innenfläche in Richtung des vorderen Endes 22 der Düse 2, also aus der Düse 2 heraus, so bildet diese die virtuelle Linie V2. Diese berührt nicht die durch die Öffnung 64 mit dem Durchmesser D6 gebildeten Körperkanten 65 der Düsenschutzkappe 6. Gleiches gilt für die verlängerte virtuelle Verbindungslinie V1 zwischen der Körperkante 201 der Düsenöffnung 24 am vorderen Ende 22 und der Körperkante 203 am Übergang vom ersten Abschnitt A1 zum zweiten Abschnitt A3.

Die Fläche A60 und der Durchmesser D6 der Öffnung 64 der Düsenschutzkappe 6 sind größer als die durch die verlängerten virtuellen Verbindungslinien V1 und V2 projizierten virtuellen Flächen A70 und A80 oder Durchmesser der Düse 2 auf die Düsenschutzkappe 6.

Weiterhin ist die Länge L61 des kürzesten Abstandes zwischen der Außenfläche des vorderen Endes 22 der Düse 2 und der Innenfläche der Düsenschutzkappe 6 beispielhaft 0,7 mm und ist damit kleiner als die Länge L1= 1,0 mm des ersten Abschnitts A1 und die Länge L3 = 1,0 mm des zweiten Abschnitts A3 der Düse 2 und auch kleiner als die Summe L1 und L3, die 2 mm beträgt.

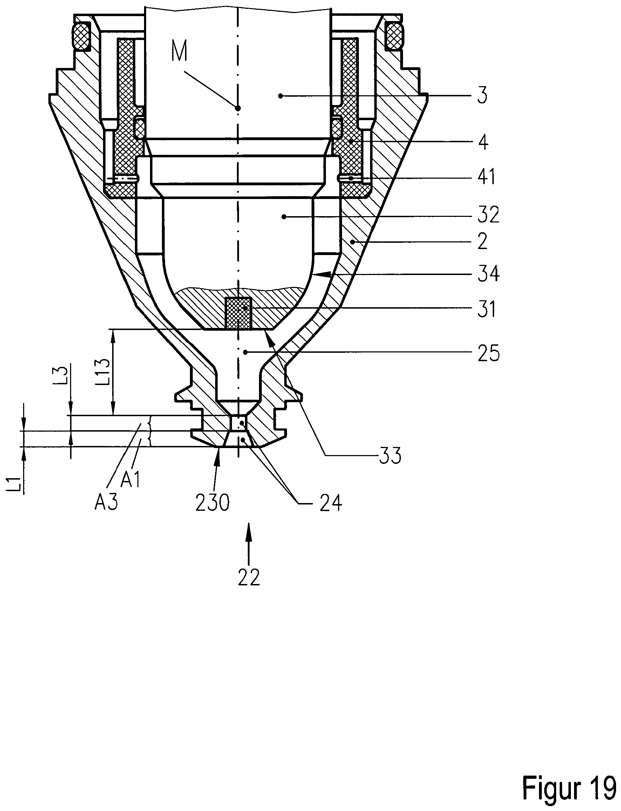

In Figur 19 ist eine geschnittene Detailansicht einer Anordnung, die Bestandteil des Plasmabrennerkopfes aus Figur 16 ist, gezeigt. Die Anordnung umfasst eine Düse 2 gemäß einer besonderen Ausführungsform der Erfindung und eine Elektrode 3. Zudem ist eine Gasführung 4 gezeigt.

Das vordere Ende 33 der Elektrode 3 ragt in den Innenraum der Düse 2 hinein.

Weiterhin befindet sich zwischen der Elektrode 3 und der Düse 2 eine Gasführung 4 für das Plasmagas PG. Die Gasführung 4 hat Öffnungen 41, die das Plasmagas durchleiten und hier beispielhaft radial in den Innenraum zwischen Elektrode 3 und Düse 2 führen. Durch einen Versatz zur Radialen kann das Plasmagas PG in Rotation versetzt werden. Die Gasführung 4 isoliert die Elektrode 3 und Düse 2 elektrisch voreinander. Der Abstand L13 zwischen dem vorderen Endes 33 der Elektrode 3 und dem Übergang vom dritten Abschnitts A5 zum zweiten Abschnitt A3 der Düsenöffnung 24 der Düse 2 ist 6 mm lang, die Länge L1 des ersten Abschnitts A1 und die Länge L3 des zweiten Abschnitts A3 betragen jeweils 1 mm. Die Summe der Längen L1 und L3 betragen dann 2 mm. Somit sind sowohl L1, L2 als auch die Summe beider kürzer als die Länge des Abstandes L13.

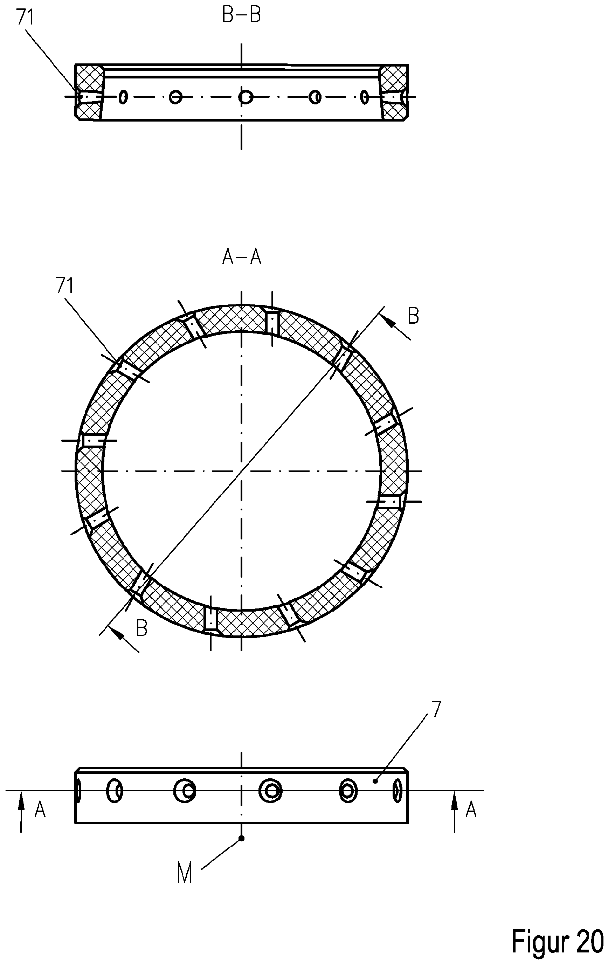

In Figur 20 ist beispielhaft die Gasführung 7 für das Sekundärgas SG gezeigt. Aus der mittleren geschnittenen Darstellung geht hervor, dass die Öffnungen 71 zur Radialen zur Längsachse M versetzt angeordnet sind. Das durch die Öffnungen 71 strömende Gas wird so in Rotation versetzt. Die Rotation kann aber auch durch eine andere räumliche Ausrichtung der Öffnungen, beispielsweise eine Neigung zur Längsachse M erfolgen.

In Figur 21 ist beispielhaft die Gasführung 4 für das Plasmagas oder Prozessgas gezeigt. Aus der mittleren geschnittenen Darstellung geht hervor, dass die Öffnungen 41 zur Radialen zur Längsachse M versetzt angeordnet sind. Das durch die Öffnungen 41 strömende Gas wird so in Rotation versetzt. Die Rotation kann aber auch durch eine andere räumliche Ausrichtung der Öffnungen, beispielsweise eine Neigung zur Längsachse M erfolgen.

In der vorangehenden Beschreibung wurde auf eine Düse für Plasmaschneiden bzw. für einen Plasmabrennerkopf abgestellt. Bei dem Plasmabrennerkopf kann es sich um einen Plasmabrennerschneidkopf handeln. Die Beschreibung soll aber in analoger Weise auch für eine Düse zum Laserschneiden bzw. für einen Laserschneidkopf und zum Plasma-Laser-Schneiden bzw. für einen Plasma-Laser-Schneidkopf gelten.

Bezugszeichenliste

| | |
|---|---|
| 1 | Plasmabrenner, Plasmabrennerkopf, Plasmabrennerschneidkopf, Plasma-Laser-Schneidkopf |
| 2 | Düse |
| 3 | Elektrode |
| 4 | Gasführung Plasmagas; Prozessgas |
| 5 | Düsenkappe |
| 6 | Düsenschutzkappe |
| 7 | Gasführung Sekundärgas |
| 8 | Brennerkörper |
| 20 | Körper |
| 21 | Innenfläche |
| 22 | vorderes Ende |
| 23 | Außenfläche |
| 24 | Düsenöffnung |
| 25 | Innenraum der Düse |
| 28 | hinteres Ende |
| 31 | Emissionseinsatz der Elektrode 3 |
| 32 | Elektrodenhalter |
| 33 | vorderes Ende der Elektrode |
| 34 | Außenfläche der Elektrode |
| 41 | Öffnungen in der Gasführung 4 für das Plasmagas |
| 51 | Raum zwischen Düse 2 und Düsenkappe5 |
| 55 | Düsenschutzkappenhalterung |
| 61 | Innenraum zwischen Düsenschutzkappe 6 und Düsenkappe 5 und Düse 2 |
| 62 | Innenfläche der Düsenschutzkappe |
| 64 | Öffnung der Düsenschutzkappe |
| 65 | Körperkante der Öffnung der Düsenschutzkappe |
| 71 | Öffnungen in der Gasführung 7 für das Sekundärgas |
| 81 | Düsenhalter |
| 201 | Körperkante der Düsenöffnung am vordere Ende 22 der Düsenöffnung 24 |
| 203 | Körperkante der Düsenöffnung am vorderen Ende 22 der Düsenöffnung 24 am Übergang des Abschnittes A1 zu A3 |
| 204 | Körperkante zwischen Innenflächen 211 und 213 |

| 205 | Körperkante zwischen Innenflächen 220 und 224 |
|---|---|
| 206 | Körperkante zwischen Innenflächen 224 und 227 |
| 211 | Innenfläche im des ersten Abschnitts A1 |
| 213 | weitere Innenfläche des ersten Abschnitts A1 |
| 220 | Innenfläche des zweiten Abschnitts A3 |
| 224 | Innenfläche des dritten Abschnitts A5 |
| 227 | Innenfläche des vierten Abschnitts A7 |
| 230 | Fläche am vorderen Ende 22 der Düse |
| 238 | Nut |
| 240 | Rundring |
| A1 | erster Abschnitt |
| A3 | zweiter Abschnitt |
| A5 | dritter Abschnitt |
| A7 | vierter Abschnitt |
| A10 | Fläche der Düsenöffnung am vorderen Ende 22 bei D1 |
| A20 | weitere Fläche der Düsenöffnung im ersten Abschnitt bei D2 |
| A30 | Fläche der kleinsten Düsenöffnung im zweiten Abschnitt A3 bei D3 |
| A31 | Fläche der Düsenöffnung im zweiten Abschnitt |
| A60 | Fläche der Öffnung 64 der Düsenschutzkappe |
| A70 | projizierte virtuelle Fläche von der Verbindungslinie V1 auf die Ebene der Fläche A60 |
| A80 | projizierte virtuelle Fläche von der Verbindungslinie V2 auf die Ebene der Fläche A60 |
| D1 | Durchmesser der Düsenöffnung im ersten Abschnitt A1 am vorderen Ende |
| D2 | weiterer Durchmesser der Düsenöffnung im ersten Abschnitt A1 |
| D3 | Durchmesser der Düsenöffnung im zweiten Abschnitt ($\gamma$ = o° bzw. 180°) |
| D31 | weiterer Durchmesser der Düsenöffnung im zweiten Abschnitt ($\gamma$ > o° bis 8°) |
| D32 | weiterer Durchmesser der Düsenöffnung im zweiten Abschnitt ($\gamma$ < 180 bis 172°) |
| D6 | Durchmesser der Öffnung 64 der Düsenschutzkappe |
| D7 | Durchmesser im Abschnitt A7 |
| D70 | Durchmesser der projizierten virtuellen Fläche A70 |
| D80 | Durchmesser der projizierten virtuellen Fläche A80 |
| L1 | Länge des ersten Abschnitts A1 |
| L3 | Länge des zweiten Abschnitts A3 |
| L5 | Länge des dritten Abschnitts A5 |
| L7 | Länge des vierten Abschnitts A7 |
| L13 | Abstand zwischen dem vorderen Ende 33 der Elektrode 3 |
| L61 | Abstand zwischen Außenfläche des vorderen Endes 22 der Düse 2 und der Innenfläche 62 der Düsenschutzkappe 6 |
| L20 | Gesamtlänge der Düse |
| M | Längsachse |
| PG | Plasmagas oder Prozessgas |
| SG | Sekundärgas |
| T | Tangente |
| V1 | virtuelle Verbindungslinie zwischen der Körperkante 201 und 203 |
| V2 | virtuelle Verbindungslinie zwischen der Körperkante 201 und 204 |
| V3 | virtuelle Verbindungslinie zwischen der Körperkante 203 und 205 |
| V4 | virtuelle Verbindungslinie zwischen der Körperkante 205 und 206 |
| V10 | Volumen des ersten Abschnitts A1 der Düsenöffnung 24 |
| V30 | Volumen des zweiten Abschnitts A3 der Düsenöffnung 24 |
| WR | Kühlmittelrücklauf |
| WV | Kühlmittelvorlauf |
| $\alpha$ | Winkel zwischen Längsachse M und der virtuellen Verbindungslinie V2 oder der Innenfläche 211 des ersten Abschnitts A1 |
| $\alpha$1 | Winkel zwischen der Längsachse M und der virtuellen Verbindungslinie V1 des ersten Abschnitts A1 |
| $\alpha$2 | Winkel zwischen der Längsachse M und der Tangente T |
| $\beta$ | Winkel zwischen Längsachse M und Innenfläche 213 des ersten Abschnitts A1 |
| $\gamma$ | Winkel zwischen Längsachse M und Innenfläche 220 des zweiten Abschnitts A3 |
| $\gamma$1 | Winkel zwischen Längsachse M und der virtuellen Verbindungslinie V3 des zweiten Abschnitts A3 |
| $\delta$ | Winkel zwischen Längsachse M und Innenfläche 224 der dritten Abschnitts A5 |

$\delta1$   Winkel zwischen Längsachse M und der virtuellen Verbindungslinie V4 des dritten Abschnitts A5
$\varepsilon$   Winkel zwischen Längsachse M und Innenfläche 227 der vierten Abschnitts A7

**Patentansprüche**

1. Düse (2) für einen Plasmabrennerkopf, Laserschneidkopf oder Plasma-Laser-Schneidkopf, umfassend einen Körper (20) mit einer Längsachse M, einem vorderen Ende (22), einem hinteren Ende (28) und einer Düsenöffnung (24) am vorderen Ende (22), wobei die Düsenöffnung (24) am vorderen Ende (22), vom vorderen Ende her gesehen, in Längsschnittansicht mindestens folgende Abschnitte umfasst:

   - einen sich entlang der Längsachse M erstreckenden, sich in Richtung des hinteren Endes (28) verjüngenden ersten Abschnitt A1 mit einer Innenfläche (211) und einer Körperkante (201) am vorderen Ende (22) und
   - einen sich entlang der Längsachse M erstreckenden zweiten Abschnitt A3 mit einer Innenfläche (220) und einer Körperkante (203) am Übergang vom ersten Abschnitt A1 zum zweiten Abschnitt A3,
   wobei eine virtuelle Verbindungslinie V1 zwischen der Körperkante (201) der Düsenöffnung (24) am vorderen Ende (22) und der Körperkante (203) am Übergang vom ersten Abschnitt A1 zum zweiten Abschnitt A3 und die Längsachse M einen Winkel $\alpha1$ in einem Bereich von 15° bis 40°, bevorzugter in einem Bereich von 20° bis 38°, noch bevorzugter in einem Bereich von 20° bis 35° und am bevorzugtesten in einem Bereich von 25° bis 35°, einschließen und/oder die Innenfläche (211) des ersten Abschnitts A1 und die Längsachse M einen Winkel $\alpha$ in einem Bereich von 10° bis 30°, bevorzugter in einem Bereich von 12° bis 30°, noch bevorzugter in einem Bereich von 14° bis 25°, noch bevorzugter in einem Bereich von 15°bis 20°, und am bevorzugtesten im Bereich von 17° bis 20° einschließen, und
   entweder eine virtuelle Verbindungslinie V3 zwischen der Körperkante (203) am Übergang vom ersten Abschnitt A1 zum zweiten Abschnitt A3 und der Körperkante (205) am Übergang vom zweiten Abschnitt A3 zum dritten Abschnitt A5 und die Längsachse M einen Winkel $\gamma1$ in einem Bereich von o° bis 8°, bevorzugt 5°, einschließen und sich in Richtung zum hinteren Ende (28) erweitert oder in einem Bereich von 172° bis 180°, bevorzugt 175°, einschließen und sich in Richtung zum hinteren Ende (28) verjüngt oder parallel zur Längsachse M verläuft oder sich die Innenfläche (220) des zweiten Abschnitts A3 unter einem Winkel $\gamma$ in einem Bereich von o° bis 8°, bevorzugt 5°, in Richtung zum hinteren Ende (28) erweitert oder unter einem Winkel in einem Bereich von 172° bis 180°, bevorzugt 175°, in Richtung zum hinteren Ende (28) verjüngt oder parallel zur Längsachse M verläuft, wobei sich am Übergang oder vor oder unmittelbar vor dem Übergang vom ersten Abschnitt A1 zum zweiten Abschnitt A3 mindestens eine weitere sich unter einem Winkel $\beta$ zur Längsachse M in einem Bereich von 45° bis 120°, bevorzugter in einem Bereich von 60° bis 110°, noch bevorzugter in einem Bereich von 80° bis 100° und noch bevorzugter in einem Bereich von 85° bis 95°, am bevorzugtesten senkrecht erstreckende Innenfläche (213) befindet.

2. Düse (2) nach Anspruch 1, wobei, vom vorderen Ende (22) her gesehen, nach dem zweiten Abschnitt A3 ein sich entlang der Längsachse M erstreckender, sich in Richtung des hinteren Endes (28) erweiternder dritter Abschnitt A5 mit einer Innenfläche (224) vorhanden ist.

3. Düse nach Anspruch 2, wobei die Innenfläche (224) des dritten Abschnitts A5 zumindest einen sich entlang der Längsachse M in Richtung des hinteren Endes (28) erweiternden Bereich aufweist, dessen Innenfläche und die Längsachse M einen Winkel $\delta$ in einem Bereich von 30° bis 90°, bevorzugter in einem Bereich von 40° bis 75° einschließen,

   oder wobei, vom vorderen Ende (22) her gesehen, nach dem dritten Abschnitt A5 ein vierter Abschnitt A7 mit einer Innenfläche (227) vorhanden ist und eine virtuelle Verbindungslinie V4 zwischen der Körperkante (205) am Übergang vom zweiten Abschnitt A3 zum dritten Abschnitt A5 und der Körperinnenkante (206) am Übergang vom dritten Abschnitt A5 zum vierten Abschnitt A7 und die Längsachse M einen Winkel $\delta1$ in einem Bereich von 30° bis 90°, bevorzugter in einem Bereich von 40° bis 75° einschließen und/oder die Innenfläche (224) des dritten Abschnitts A5 und die Längsachse M einen Winkel $\delta$ in einem Bereich von 30° bis 90°, bevorzugter in einem Bereich von 40° bis 75°, einschließen.
   oder wobei, vom vorderen Ende (22) her gesehen, nach dem dritten Abschnitt A5 ein vierter Abschnitt A7 mit einer Innenfläche (227) vorhanden ist, wobei die Innenfläche (227) des vierten Abschnitts A7 zumindest einen Bereich aufweist, der sich unter einem Winkel $\varepsilon$ zur Längsachse M in einem Bereich von o° bis 10°, bevorzugt 5°, in Richtung zum hinteren Ende (28) erweitert oder unter einem Winkel in einem Bereich von 170° bis 180°, bevorzugt 175°, in Richtung zum hinteren Ende (28) verjüngt oder parallel zur Längsachse M verläuft, oder wobei

sich die Innenfläche (227) des vierten Abschnitts A7 unter einem Winkel ε zur Längsachse M in einem Bereich von o° bis 10°, bevorzugt 5°, in Richtung zum hinteren Ende (28) erweitert oder unter einem Winkel in einem Bereich von 170° bis 180°, bevorzugt 175°, in Richtung zum hinteren Ende (28) verjüngt oder parallel zur Längsachse M verläuft.

4. Düse (2) nach einem der Ansprüche 1 bis 3, wobei sich der erste Abschnitt A1, vom vorderen Ende (22) her gesehen, konisch, konvex oder konkav verjüngt und/oder

sich der zweite Abschnitt A3 konisch, konvex oder konkav verjüngt oder erweitert und/oder
sich der dritte Abschnitt A5 konisch, konvex oder konkav erweitert und/oder
sich der vierte Abschnitt A7 konisch, konvex oder konkav verjüngt oder erweitert.

5. Düse(2) nach einem der Ansprüche 1 bis 3, wobei sich der erste Abschnitt A1, vom vorderen Ende (22) her gesehen, stetig oder unstetig verjüngt und/oder

sich der zweite Abschnitt A3 stetig oder unstetig verjüngt oder erweitert und/oder
sich der dritte Abschnitt A5 stetig oder unstetig erweitert und/oder
sich der vierte Abschnitt A7 stetig oder unstetig verjüngt oder erweitert.

6. Düse (2) nach einem der Ansprüche 1 bis 3, wobei sich der erste Abschnitt A1, vom vorderen Ende (22) her gesehen, stufig verjüngt und/oder

sich der zweite Abschnitt A3 stufig und/oder senkrecht zur Längsachse M verjüngt oder erweitert und/oder
sich der dritte Abschnitt A5 stufig und/oder senkrecht zur Längsachse M erweitert und/oder
sich der vierte Abschnitt A7 stufig und/oder senkrecht zur Längsachse M verjüngt oder erweitert.

7. Düse (2) nach einem der vorhergehenden Ansprüche, wobei

der erste Abschnitt A1 und der zweite Abschnitt A3 oder
der zweite Abschnitt A3 und der dritte Abschnitt A5 oder
der dritte Abschnitt A5 und der vierte Abschnitt A7 oder
der erste Abschnitt A1, der zweite Abschnitt A3 und der dritte Abschnitt A5 oder
der zweite Abschnitt A3, der dritte Abschnitt A5 und der vierte Abschnitt A7 oder
der erste Abschnitt A1, der zweite Abschnitt A3, der dritte Abschnitt A5 und der vierte Abschnitt A7
unmittelbar aufeinander folgen.

8. Düse (2) nach einem der vorhergehenden Ansprüche, wobei eine größte Querschnittsfläche A10 des ersten Abschnitts A1 und/oder eine größte unmittelbar am vorderen Ende (22) der Düsenöffnung (24) befindliche Querschnittsfläche A10 der Düsenöffnung (24) mindestens 1,7, vorzugsweise 2,1, mal größer und/oder maximal 4,0, vorzugsweise 3,7, mal größer als eine kleinste Querschnittsfläche A30, A31 des zweiten Abschnitts A3 und/oder eine kleinste Querschnittsfläche A30, A31 der Düsenöffnung (24) ist/sind.

9. Düse (2) nach einem der vorhergehenden Ansprüche, wobei ein größter Durchmesser D1 des ersten Abschnitts A1 und/oder ein größter unmittelbar am vorderen Ende der Düsenöffnung (24) befindlicher Durchmesser D1 der Düsenöffnung (24) mindestens 1,3, vorzugsweise 1,45, mal größer und/oder maximal 2,1, vorzugsweise 1,9, mal größer als ein kleinster Durchmesser D3 des zweiten Abschnitts A3 und/oder ein kleinster Durchmesser D3 der Düsenöffnung (24) ist/sind.

10. Düse (2) nach einem der vorhergehenden Ansprüche, wobei ein größter Durchmesser D1 des ersten Abschnitts A1 und/oder ein größter unmittelbar am vorderen Ende (22) der Düsenöffnung (24) befindlicher Durchmesser D1 der Düsenöffnung (24) mindestens 0,5 mm, vorzugsweise 0,6 mm, größer und/oder maximal 1,2 mm, vorzugsweise 1,0 mm, größer als ein kleinster Durchmesser D3 des zweiten Abschnitts A3 und/oder ein kleinster Durchmesser D3 der Düsenöffnung (24) ist/sind.

11. Düse (2) nach einem der vorhergehenden Ansprüche, wobei der Quotient L1/L3 der sich entlang der Längsachse M erstreckenden Länge L1 des ersten Abschnitts A1 und der sich entlang der Längsachse M erstreckenden Länge L3 des zweiten Abschnitts A3 zwischen 0,5 bis 1,2, vorzugsweise zwischen 0,65 und 1, beträgt,

und/oder wobei der Quotient L5/L1 der sich entlang der Längsachse M erstreckenden Länge L5 des dritten Abschnitts A3 und der sich entlang der Längsachse M erstreckenden Länge L1 des ersten Abschnitts A1 kleiner oder gleich 1,5, vorzugsweise kleiner oder gleich 1,25, ist,

und/oder wobei der Quotient L5/L3 der sich entlang der Längsachse M erstreckenden Länge L5 des dritten Abschnitts A3 und der sich entlang der Längsachse erstreckenden Länge L3 des zweiten Abschnitts A3 kleiner oder gleich 1,25, vorzugsweise kleiner oder gleich 1, ist.

12. Düse (2) nach einem der vorhergehenden Ansprüche, wobei für die Längen der ersten , zweiten , dritten und vierten Abschnitte gilt:

L1 <= 2 mm, L3 <= 3 mm, L5 <= 2 mm und L7 <= 3 mm, vorzugsweise
L1 <= 1 mm, L3 <= 1,5 mm, L5 <= 1,5 mm und L7 <= 2,5 mm.

13. Düse (2) nach einem der vorhergehenden Ansprüche, wobei der Quotient L3/D3 der sich entlang der Längsachse M erstreckenden Länge L3 des zweiten Abschnitts A3 und des Durchmessers D3 des zweiten Abschnitts A3 zwischen 0,6 und 1,7, vorzugsweise zwischen 0,65 und 1,55, beträgt,

und/oder wobei ein größter Durchmesser D7 des vierten Abschnitts A7 mindestens genauso groß und maximal doppelt so groß ist wie ein bzw. der größte(r) Durchmesser D1 des ersten Abschnitts A1 und/oder ein bzw. der größte unmittelbar am vorderen Ende (22) der Düsenöffnung 24 befindliche Durchmesser D1 der Düsenöffnung (24).

14. Düse (2) nach einem der vorhergehenden Ansprüche, wobei ein durch die Innenfläche(n) (211 und/oder 211 und 213) des ersten Abschnitts A1 gebildetes Volumen V10 größer , bevorzugt mindestens 1,3 mal größer und/oder maximal 2,5 mal größer, noch bevorzugter maximal 2,2 mal größer ist als ein durch die Innenfläche (220) des zweiten Abschnitts A3 gebildetes Volumen V30,

und/oder am Übergang vom ersten Abschnitt A1 zum zweiten Abschnitt A3 der Durchmesser D3 des zweiten Abschnitts A3 mindestens 0,2 mm und/oder maximal 0,6 mm kleiner als der Durchmesser D2 und/oder der kleinste Durchmesser D2 des ersten Abschnitts A1 ist.

## Claims

1. Nozzle (2) for a plasma torch head, laser cutting head or plasma laser cutting head, comprising a body (20) with a longitudinal axis M, with a front end (22), with a rear end (28) and with a nozzle opening (24) at the front end (22), wherein the nozzle opening (24) at the front end (22), as viewed from the front end, comprises at least the following portions in a longitudinal sectional view:

- a first portion A1 which extends along the longitudinal axis M and which narrows in the direction of the rear end (28) and which has an inner surface (211) and a body edge (201) at the front end (22), and
- a second portion A3 which extends along the longitudinal axis M and which has an inner surface (220) and a body edge (203) at the transition from the first portion A1 to the second portion A3,

wherein a virtual connecting line V1 between the body edge (201) of the nozzle opening (24) at the front end (22) and the body edge (203) at the transition from the first portion A1 to the second portion A3 includes with the longitudinal axis M an angle $\alpha 1$ in a range from 15° to 40°, more preferably in a range from 20° to 38°, even more preferably in a range from 20° to 35° and most preferably in a range from 25° to 35°, and/or the inner surface (211) of the first portion A1 includes with the longitudinal axis M an angle $\alpha$ in a range from 10° to 30°, more preferably in a range from 12° to 30°, even more preferably in a range from 14° to 25°, even more preferably in a range from 15° to 20° and most preferably in the range from 17° to 20°, and

either a virtual connecting line V3 between the body edge (203) at the transition from the first portion A1 to the second portion A3 and the body edge (205) at the transition from the second portion A3 to the third portion A5 includes with the longitudinal axis M an angle $\gamma 1$ in a range from 0° to 8°, preferably of 5°, with widening in the direction of the rear end (28), or in a range from 172° to 180°, preferably of 175°, with narrowing in the direction of the rear end (28), or extends parallel to the longitudinal axis M, or

the inner surface (220) of the second portion A3 widens at an angle $\gamma$ in a range from 0° to 8°, preferably of 5°, in the direction of the rear end (28) or narrows at an angle in a range from 172° to 180°, preferably of 175°, in the direction of the rear end (28), or extends parallel to the longitudinal axis M,

**characterized in that**,

at the transition or before or immediately before the transition from the first portion A1 to the second portion A3, there is situated at least one further inner surface (213) which extends at an angle $\beta$ to the longitudinal axis M in a range from 45° to 120°, more preferably in a range from 60° to 110°, even more preferably in a range from 80° to 100° and even more preferably in a range from 85° to 95°, most preferably of 90°.

2. Nozzle (2) according to Claim 1, wherein, as viewed from the front end (22), after the second portion A3, there is provided a third portion A5 which extends along the longitudinal axis M and which widens in the direction of the rear end (28) and which has an inner surface (224).

3. Nozzle according to Claim 2, wherein the inner surface (224) of the third portion A5 has at least one region which widens along the longitudinal axis M in the direction of the rear end (28) and whose inner surface includes with the longitudinal axis M an angle $\delta$ in a range from 30° to 90°, more preferably in a range from 40° to 75°,

or wherein, as viewed from the front end (22), a fourth portion A7 with an inner surface (227) is provided after the third portion A5, and a virtual connecting line V4 between the body edge (205) at the transition from the second portion A3 to the third portion A5 and the body inner edge (206) at the transition from the third portion A5 to the fourth portion A7 includes with the longitudinal axis M an angle $\delta 1$ in a range from 30° to 90°, more preferably in a range from 40° to 75°, and/or the inner surface (224) of the third portion A5 includes with the longitudinal axis M an angle $\delta$ in a range from 30° to 90°, more preferably in a range from 40° to 75°, or wherein, as viewed from the front end (22), a fourth portion A7 with an inner surface (227) is provided after the third portion A5, wherein the inner surface (227) of the fourth portion A7 has at least one region which widens at an angle $\varepsilon$ to the longitudinal axis M in a range from 0° to 10°, preferably of 5°, in the direction of the rear end (28) or narrows at an angle in a range from 170° to 180°, preferably of 175°, in the direction of the rear end (28), or extends parallel to the longitudinal axis M, or wherein the inner surface (227) of the fourth portion A7 widens at an angle $\varepsilon$ to the longitudinal axis M in a range from 0° to 10°, preferably of 5°, in the direction of the rear end (28) or narrows at an angle in a range from 170° to 180°, preferably of 175°, in the direction of the rear end (28), or extends parallel to the longitudinal axis M.

4. Nozzle (2) according to one of Claims 1 to 3, wherein the first portion A1, as viewed from the front end (22), narrows in a conical, convex or concave manner, and/or

the second portion A3 narrows or widens in a conical, convex or concave manner, and/or
the third portion A5 widens in a conical, convex or concave manner, and/or
the fourth portion A7 narrows or widens in a conical, convex or concave manner.

5. Nozzle (2) according to one of Claims 1 to 3, wherein the first portion A1, as viewed from the front end (22), narrows in a continuous or discontinuous manner, and/or

the second portion A3 narrows or widens in a continuous or discontinuous manner, and/or
the third portion A5 widens in a continuous or discontinuous manner, and/or
the fourth portion A7 narrows or widens in a continuous or discontinuous manner.

6. Nozzle (2) according to one of Claims 1 to 3, wherein the first portion A1, as viewed from the front end (22), narrows in a stepped manner, and/or

the second portion A3 narrows or widens in a stepped manner and/or perpendicularly to the longitudinal axis M, and/or
the third portion A5 widens in a stepped manner and/or perpendicularly to the longitudinal axis M, and/or
the fourth portion A7 narrows or widens in a stepped manner and/or perpendicularly to the longitudinal axis M.

7. Nozzle (2) according to one of the preceding claims, wherein

the first portion A1 and the second portion A3 or
the second portion A3 and the third portion A5 or
the third portion A5 and the fourth portion A7 or
the first portion A1, the second portion A3 and the third portion A5 or
the second portion A3, the third portion A5 and the fourth portion A7 or
the first portion A1, the second portion A3, the third portion A5 and the fourth portion A7
directly follow one another.

8. Nozzle (2) according to one of the preceding claims, wherein a greatest cross-sectional area A10 of the first portion A1 and/or a greatest cross-sectional area A10 of the nozzle opening (24) directly at the front end (22) of the nozzle opening (24) are/is at least 1.7, preferably 2.1, times greater, and/or at most 4.0, preferably 3.7, times greater, than a smallest cross-sectional area A30, A31 of the second portion A3 and/or a smallest cross-sectional area A30, A31 of the nozzle opening (24).

9. Nozzle (2) according to one of the preceding claims, wherein a greatest diameter $D_1$ of the first portion $A_1$ and/or a greatest diameter $D_1$ of the nozzle opening (24) directly at the front end of the nozzle opening (24) are/is at least 1.3, preferably 1.45, times greater and/or at most 2.1, preferably 1.9, times greater than a smallest diameter $D_3$ of the second portion $A_3$ and/or a smallest diameter $D_3$ of the nozzle opening (24).

10. Nozzle (2) according to one of the preceding claims, wherein a greatest diameter $D_1$ of the first portion $A_1$ and/or a greatest diameter $D_1$ of the nozzle opening (24) directly at the front end (22) of the nozzle opening (24) are/is at least 0.5 mm, preferably 0.6 mm, greater and/or at most 1.2 mm, preferably 1.0 mm, greater than a smallest diameter $D_3$ of the second portion $A_3$ and/or a smallest diameter $D_3$ of the nozzle opening (24).

11. Nozzle (2) according to one of the preceding claims, wherein the quotient $L_1/L_3$ of the length $L_3$, along the longitudinal axis M, of the first portion $A_1$ and the length $L_3$, along the longitudinal axis M, of the second portion $A_3$ is between 0.5 and 1.2, preferably between 0.65 and 1,

and/or wherein the quotient $L_5/L_1$ of the length $L_5$, along the longitudinal axis M, of the third portion $A_3$ and the length $L_3$, along the longitudinal axis M, of the first portion $A_1$ is less than or equal to 1.5, preferably less than or equal to 1.25,
and/or wherein the quotient $L_5/L_3$ of the length $L_5$, along the longitudinal axis M, of the third portion $A_3$ and the length $L_3$, along the longitudinal axis, of the second portion $A_3$ is less than or equal to 1.25, preferably less than or equal to 1.

12. Nozzle (2) according to one of the preceding claims, wherein, for the lengths of the first, second, third and fourth portions, it holds that:

$L_1 <= 2$ mm, $L_3 <= 3$ mm, $L_5 <= 2$ mm and $L_7 <= 3$ mm, preferably
$L_1 <= 1$ mm, $L_3 <= 1.5$ mm, $L_5 <= 1.5$ mm and $L_7 <= 2.5$ mm.

13. Nozzle (2) according to one of the preceding claims, wherein the quotient $L_3/D_3$ of the length $L_3$, along the longitudinal axis M, of the second portion $A_3$ and the diameter $D_3$ of the second portion $A_3$ is between 0.6 and 1.7, preferably between 0.65 and 1.55,
and/or wherein a greatest diameter $D_7$ of the fourth portion $A_7$ is at least equal to, and at most twice, a or the greatest diameter $D_2$ of the first portion $A_1$ and/or a or the greatest diameter $D_1$ of the nozzle opening (24) directly at the front end (22) of the nozzle opening (24) .

14. Nozzle (2) according to one of the preceding claims, wherein a volume $V_{10}$ of a space formed by the inner surface(s) (211 and/or 211 and 213) of the first portion $A_1$ is greater, preferably at least 1.3 times greater and/or at most 2.5 times greater, even more preferably at most 2.2 times greater, than a volume $V_{30}$ of a space formed by the inner surface (220) of the second portion A3,
and/or, at the transition from the first portion $A_1$ to the second portion $A_3$, the diameter $D_3$ of the second portion $A_3$ is at least 0.2 mm and/or at most 0.6 mm less than the diameter $D_2$ and/or the smallest diameter $D_2$ of the first portion $A_1$.

**Revendications**

1. Buse (2) pour une tête de torche à plasma, une tête de découpe laser ou une tête de découpe laser à plasma, comprenant un corps (20) avec un axe longitudinal M, une extrémité avant (22), une extrémité arrière (28) et une ouverture de buse (24) à l'extrémité avant (22), l'ouverture de buse (24) à l'extrémité avant (22) comprenant, vue depuis l'extrémité avant, en coupe longitudinale au moins les sections suivantes :

- une première section A1 s'étendant le long de l'axe longitudinal M, se rétrécissant en direction de l'extrémité arrière (28), avec une surface intérieure (211) et un bord de corps (201) à l'extrémité avant (22), et

- une deuxième section A3 s'étendant le long de l'axe longitudinal M, avec une surface intérieure (220) et un bord de corps (203) à la transition de la première section A1 à la deuxième section A3,

dans laquelle une ligne de liaison virtuelle V1 entre le bord de corps (201) de l'ouverture de buse (24) à l'extrémité avant (22) et le bord de corps (203) à la transition de la première section A1 à la deuxième section A3 et l'axe longitudinal M forme un angle $\alpha1$ dans une plage de 15° à 40°, de manière davantage préférée dans une plage de 20° à 38°, de manière encore davantage préférée dans une plage de 20° à 35° et de manière préférée entre toutes dans une plage de 25° à 35°, et/ou la surface intérieure (211) de la première section A1 et l'axe longitudinal M forment un angle $\alpha$ dans une plage de 10° à 30°, de manière davantage préférée dans une plage de 12° à 30°, de manière encore davantage préférée dans une plage de 14° à 25°, de manière encore davantage préférée dans une plage de 15° à 20°, et de manière préférée entre toutes dans une plage de 17° à 20°, et

soit une ligne de liaison virtuelle V3 entre le bord de corps (203) à la transition de la première section A1 à la deuxième section A3 et le bord de corps (205) à la transition de la deuxième section A3 à la troisième section A5 et l'axe longitudinal M forment un angle $\gamma1$ dans une plage de 0° à 8°, de préférence 5°, en s'élargissant en direction de l'extrémité arrière (28), ou dans une plage de 172° à 180°, de préférence 175°, en se rétrécissant en direction de l'extrémité arrière (28) ou étant parallèle à l'axe longitudinal M, soit la surface intérieure (220) de la deuxième section A3 s'élargit en direction de l'extrémité arrière (28) selon un angle $\gamma$ dans une plage de 0° à 8°, de préférence 5°, ou se rétrécit en direction de l'extrémité arrière (28) selon un angle dans une plage de 172° à 180°, de préférence 175°, ou est parallèle à l'axe longitudinal M, **caractérisée en ce que**

à la transition ou avant ou directement avant la transition de la première section A1 à la deuxième section A3, se trouve au moins une autre surface intérieure (213) s'étendant selon un angle $\beta$ par rapport à l'axe longitudinal M dans une plage de 45° à 120°, de de manière davantage préférée dans une plage de 60° à 110°, de manière encore davantage préférée dans une plage de 80° à 100° et de manière encore davantage préférée dans une plage de 85° à 95°, de manière préférée entre toutes perpendiculairement.

2. Buse (2) selon la revendication 1, dans laquelle, vue depuis l'extrémité avant (22), après la deuxième section A3, est présente une troisième section A5 s'étendant le long de l'axe longitudinal M, s'élargissant en direction de l'extrémité arrière (28), avec une surface intérieure (224).

3. Buse selon la revendication 2, dans laquelle la surface intérieure (224) de la troisième section A5 présente au moins une zone s'élargissant le long de l'axe longitudinal M en direction de l'extrémité arrière (28), dont la surface intérieure et l'axe longitudinal M forment un angle $\delta$ dans une plage de 30° à 90°, de manière davantage préférée dans une plage de 40° à 75°,

ou dans laquelle, vue depuis l'extrémité avant (22), après la troisième section A5, est présente une quatrième section A7 avec une surface intérieure (227), et une ligne de liaison virtuelle V4 entre le bord de corps (205) à la transition de la deuxième section A3 à la troisième section A5 et le bord intérieur de corps (206) à la transition de la troisième section A5 à la quatrième section A7 et l'axe longitudinal M forment un angle 51 dans une plage de 30° à 90°, de manière davantage préférée dans une plage de 40° à 75°, et/ou la surface intérieure (224) de la troisième section A5 et l'axe longitudinal M forment un angle $\delta$ dans une plage de 30° à 90°, de manière davantage préférée dans une plage de 40° à 75°,

ou dans laquelle, vue depuis l'extrémité avant (22), après la troisième section A5, est présente une quatrième section A7 avec une surface intérieure (227), la surface intérieure (227) de la quatrième section A7 présentant au moins une zone qui s'élargit selon un angle $\varepsilon$ par rapport à l'axe longitudinal M dans une plage de 0° à 10°, de préférence 5°, en direction de l'extrémité arrière (28), ou se rétrécit selon un angle dans une plage de 170° à 180°, de préférence 175°, en direction de l'extrémité arrière (28), ou est parallèle à l'axe longitudinal M, ou dans laquelle

la surface intérieure (227) de la quatrième section A7 s'élargit en direction de l'extrémité arrière (28) selon un angle $\varepsilon$ par rapport à l'axe longitudinal M dans une plage de 0° à 10°, de préférence 5°, ou se rétrécit en direction de l'extrémité arrière (28) selon un angle dans une plage de 170° à 180°, de préférence 175°, ou est parallèle à l'axe longitudinal M.

4. Buse (2) selon l'une quelconque des revendications i à 3, dans laquelle la première section A1, vue depuis l'extrémité avant (22), se rétrécit de manière conique, convexe ou concave, et/ou

la deuxième section A3 se rétrécit ou s'élargit de manière conique, convexe ou concave, et/ou
la troisième section A5 s'élargit de manière conique, convexe ou concave, et/ou
la quatrième section A7 se rétrécit ou s'élargit de manière conique, convexe ou concave.

**5.** Buse (2) selon l'une quelconque des revendications 1 à 3, dans laquelle la première section A1, vue depuis l'extrémité avant (22), se rétrécit de manière continue ou discontinue, et/ou

la deuxième section A3 se rétrécit ou s'élargit de manière continue ou discontinue, et/ou
la troisième section A5 s'élargit de manière continue ou discontinue, et/ou
la quatrième section A7 se rétrécit ou s'élargit de manière continue ou discontinue.

**6.** Buse (2) selon l'une quelconque des revendications 1 à 3, dans laquelle la première section A1, vue depuis l'extrémité avant (22), se rétrécit par paliers, et/ou

la deuxième section A3 se rétrécit ou s'élargit par paliers et/ou perpendiculairement à l'axe longitudinal M, et/ou
la troisième section A5 s'élargit par paliers et/ou perpendiculairement à l'axe longitudinal M, et/ou
la quatrième section A7 se rétrécit ou s'élargit par paliers et/ou perpendiculairement à l'axe longitudinal M.

**7.** Buse (2) selon l'une quelconque des revendications précédentes, dans laquelle

la première section A1 et la deuxième section A3 ou
la deuxième section A3 et la troisième section A5 ou
la troisième section A5 et la quatrième section A7 ou
la première section A1, la deuxième section A3 et la troisième section A5, ou
la deuxième section A3, la troisième section A5 et la quatrième section A7, ou
la première section A1, la deuxième section A3, la troisième section A5 et la quatrième section A7
se suivent directement.

**8.** Buse (2) selon l'une quelconque des revendications précédentes, dans laquelle une plus grande surface de section transversale A10 de la première section A1 et/ou une plus grande surface de section transversale A10 de l'ouverture de buse (24) se trouvant directement à l'extrémité avant (22) de l'ouverture de buse (24) est/sont au moins 1,7, de préférence 2,1 fois plus grande (s) et/ou au maximum 4,0, de préférence 3,7 fois plus grande(s) qu'une plus petite surface de section transversale A30, A31 de la deuxième section A3 et/ou qu'une plus petite surface de section transversale A30, A31 de l'ouverture de buse (24).

**9.** Buse (2) selon l'une quelconque des revendications précédentes, dans laquelle un plus grand diamètre D1 de la première section A1 et/ou un plus grand diamètre D1 de l'ouverture de buse (24) se trouvant directement à l'extrémité avant de l'ouverture de buse (24) est/sont au moins 1,3, de préférence 1,45 fois plus grand(s) et/ou au maximum 2,1, de préférence 1,9 fois plus grand (s) qu'un plus petit diamètre D3 de la deuxième section A3 et/ou qu'un plus petit diamètre D3 de l'ouverture de buse (24).

**10.** Buse (2) selon l'une quelconque des revendications précédentes, dans laquelle un plus grand diamètre D1 de la première section A1 et/ou un plus grand diamètre D1 de l'ouverture de buse (24) se trouvant directement à l'extrémité avant (22) de l'ouverture de buse (24) est/sont plus grand(s) d'au moins 0,5 mm, de préférence 0,6 mm, et/ou d'au maximum 1,2 mm, de préférence 1,0 mm, qu'un plus petit diamètre D3 de la deuxième section A3 et/ou qu'un plus petit diamètre D3 de l'ouverture de buse (24).

**11.** Buse (2) selon l'une quelconque des revendications précédentes, dans laquelle le quotient L1/L3 de la longueur L1 de la première section A1 s'étendant le long de l'axe longitudinal M et de la longueur L3 de la deuxième section A3 s'étendant le long de l'axe longitudinal M est compris entre 0,5 et 1,2, de préférence entre 0,65 et 1,

et/ou dans laquelle le quotient L5/L1 de la longueur L5 de la troisième section A3 s'étendant le long de l'axe longitudinal M et de la longueur L1 de la première section A1 s'étendant le long de l'axe longitudinal M est inférieur ou égal à 1,5, de préférence inférieur ou égal à 1,25,
et/ou dans laquelle le quotient L5/L3 de la longueur L5 de la troisième section A3 s'étendant le long de l'axe longitudinal M et de la longueur L3 de la deuxième section A3 s'étendant le long de l'axe longitudinal est inférieur ou égal à 1,25, de préférence inférieur ou égal à 1.

**12.** Buse (2) selon l'une quelconque des revendications précédentes, dans laquelle, pour les longueurs des première, deuxième, troisième et quatrième sections, on a :

L1 <= 2 mm, L3 <= 3 mm, L5 <= 2 mm et L7 <= 3 mm, de préférence

L1 <= 1 mm, L3 <= 1,5 mm, L5 <= 1,5 mm et L7 <= 2,5 mm.

13. Buse (2) selon l'une quelconque des revendications précédentes, dans laquelle le quotient L3/D3 de la longueur L3 de la deuxième section A3 s'étendant le long de l'axe longitudinal M et du diamètre D3 de la deuxième section A3 est compris entre 0,6 et 1,7, de préférence entre 0,65 et 1,55, et/ou dans laquelle un plus grand diamètre D7 de la quatrième section A7 est au moins aussi grand et au maximum deux fois plus grand qu'un ou le plus grand diamètre D1 de la première section A1 et/ou qu'un ou le plus grand diamètre D1 de l'ouverture de buse (24) se trouvant directement à l'extrémité avant (22) de l'ouverture de buse (24).

14. Buse (2) selon l'une quelconque des revendications précédentes, dans laquelle un volume V10 formé par la ou les surfaces intérieures (211 et/ou 211 et 213) de la première section A1 est plus grand, de préférence au moins 1,3 fois plus grand et/ou au maximum 2,5 fois plus grand, de manière encore davantage préférée au maximum 2,2 fois plus grand qu'un volume V30 formé par la surface intérieure (220) de la deuxième section A3, et/ou à la transition de la première section A1 à la deuxième section A3, le diamètre D3 de la deuxième section A3 est inférieur d'au moins 0,2 mm et/ou d'au maximum 0,6 mm au diamètre D2 et/ou au plus petit diamètre D2 de la première section A1.

Figur 1

Figur 2

Figur 3

Figur 4

Figur 5

Figur 5.1

Figur 6

Figur 7

Figur 7.1

Figur 7.2

Figur 8

Figur 8.1

Figur 8.2

Figur 9

Figur 9.1

Figur 9.2

Figur 9.3

Figur 10

Figur 11

M

20

24

203

22

24

M

D2

224

220

A20

211

213

201

A10

230

22

D1

Figur 12

Figur 13

D3

M

A31

24

224

220

213

211

204  203

D32

201

230

22

Figur 13a

Figur 14

Figur 15

Figur 16

Figur 17

Figur 17a

Figur 18

Figur 18a

Figur 19

B–B

71

A–A

71

B

B

7

A

A

M

Figur 20

A

4

M

41

A

A–A

41

B

B

B–B

EP 3 684 544 B1

Figur 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016037618 A1